# EUROPEAN PATENT APPLICATION

(11) **EP 4 549 142 A1**
(43) Date of publication of application: **07.05.2025**
(21) Application number: 23830755.7
(22) Date of filing: 28.03.2023
(51) Int. Cl.: B32B 3/28, B29C 65/02, B64C 1/00, B64C 1/18

(54) **PANEL MEMBER, METHOD FOR MANUFACTURING PANEL MEMBER, AND APPARATUS FOR MANUFACTURING PANEL MEMBER**

(30) Priority: 29.06.2022 JP 2022104159; 03.08.2022 JP 2022123855
(71) Applicant: ShinMaywa Industries, Ltd., Takarazuka-shi, Hyogo 665-8550 (JP)
(72) Inventor: KAMACHI, Tomohiro, Takarazuka-shi, Hyogo 665-8550 (JP); NISHIMURA, Taiichi, Takarazuka-shi, Hyogo 665-8550 (JP); TERAYAMA, Ryota, Takarazuka-shi, Hyogo 665-8550 (JP)
(74) Representative: Grünecker Patent- und Rechtsanwälte PartG mbB
(86) International application number: PCT/JP2023/012434
(87) International publication number: WO 2024/004301

(57) **Abstract**

An object of the present invention is to provide panel members each of which is light in weight and has high strength to withstand an impact from outside.

A panel member (100) includes: a first skin member (1) and a second skin member (2) each containing thermoplastic resin; and an intermediate member (3) containing continuous fibers. The first skin member (1) includes: a first connection region (C11) connected to the intermediate member (3); and a first non-connection region (C12). The second skin member (2) includes: a second connection region (C21) connected to the intermediate member (3); and a second non-connection region (C22). The first connection region (C11) and the first non-connection region (C12) are arranged alternately in a first direction X. The second connection region (C21) and the second non-connection region (C22) are arranged alternately in the first direction X. A dimension LU2 of the first non-connection region (C12) in the first direction X differs from a dimension (LD2) of the second non-connection region (C22) in the first direction X.

## Description

### TECHNICAL FIELD

The present invention relates to panel members each including skin members containing thermoplastic resin and an intermediate member containing continuous fibers, methods for manufacturing the panel members, and apparatuses for manufacturing the panel members.

### BACKGROUND ART

Panel members known in the art each include sheet-shaped outer layer bodies (i.e., skin members) and a low-density intermediate member, such as a honeycomb, polymeric foam, or corrugated intermediate member, which is interposed between the skin members. Such panel members exhibit high strength and rigidity. Such panel members are thus used in various fields and for various purposes, including use as airframe components of airplanes.

A panel member including a corrugated intermediate member, for example, is higher in bending strength than a panel member including a honeycomb intermediate member. When such a panel member contains thermoplastic resin, the panel member is able to undergo secondary forming by application of heat thereto and is thus advantageous in being formed into a shape suitable for its use. A technique that has been known in recent years involves devising a way of arranging continuous fibers so as to enhance mechanical strength in accordance with the shape of a structure (see, for example, Patent Literature 1).

### CITATION LIST

### PATENT LITERATURE

[Patent Literature 1] JP 2019-130695 A

### SUMMARY OF INVENTION

### TECHNICAL PROBLEM

A panel member including thermoplastic resin and an intermediate member containing continuous fibers as described above is expected to be lighter in weight and higher in mechanical strength in order for the panel member to find use in a wider range of applications and demonstrate greater versatility. Accordingly, the inventors have focused attention on an arrangement that is able to achieve both of these two goals at the same time in the course of conducting extensive studies.

Reducing a region occupied by an intermediate member in a panel member, for example, enables the panel member to be lighter in weight. Reducing the region occupied by the intermediate member, however, makes the panel member susceptible to a reduction in strength. In particular, when regions of skin members connected to the intermediate member are reduced (i.e., when non-connection regions are increased), strength to withstand an impact from outside may decrease. This presents difficulty in achieving lighter weight and enhanced strength.

The present invention has been made in view of these points, and its object is to provide panel members each of which is light in weight and has high strength to withstand an impact from outside. Another object of the present invention is to provide manufacturing methods and manufacturing apparatuses that are able to successfully manufacture such panel members.

### SOLUTION TO PROBLEM

A panel member disclosed herein includes: a first skin member and a second skin member each containing thermoplastic resin and having a sheet shape; and an intermediate member containing continuous fibers and interposed between the first skin member and the second skin member. The first skin member includes: a first connection region connected to the intermediate member; and a first non-connection region not connected to the intermediate member. The second skin member includes: a second connection region connected to the intermediate member; and a second non-connection region not connected to the intermediate member. The first connection region and the first non-connection region are arranged alternately in a first direction. The second connection region and the second non-connection region are arranged alternately in the first direction. A dimension of the first non-connection region in the first direction differs from a dimension of the second non-connection region in the first direction.

The first skin member and the second skin member include the non-connection regions not connected to the intermediate member, with the result that the panel member is provided with vacant regions and is thus reduced in weight. Making a proportion occupied by the non-connection regions larger than before, for example, makes it possible to further promote weight reduction. Because the first non-connection region and the second non-connection region differ in dimension, the connection region (i.e., the first connection region) of the first skin member and the connection region (i.e., the second connection region) of the second skin member differ in dimension. Placing one of the first and second skin members, whose connection region is larger, in an area susceptible to an impact, makes it possible to effectively disperse or absorb the impact and achieve high durability.

When the panel member is used as a floor surface of a structure, the first skin member may be an upper skin member disposed over the intermediate member, and the second skin member may be a lower skin member disposed under the intermediate member. In this case, the dimension of the first non-connection region in the first direction is preferably smaller than the dimension of the second non-connection region in the first direction. This results in an increase in dimension of the connection region of the first skin member (i.e., a proportion occupied by the connection region). The first skin member is able to exhibit high compressive strength to withstand, for example, bending strength (which compresses the upper skin member and stretches the lower skin member) applied when a person steps on flooring.

Devising an orientation structure of the continuous fibers makes it possible to further enhance the strength of the panel member.

A dimension of the first connection region in a second direction perpendicular to the first direction, for example, may be larger than a dimension of the first connection region in the first direction. A dimension of the first non-connection region in the second direction may be larger than the dimension of the first non-connection region in the first direction. A dimension of the second connection region in the second direction may be larger than a dimension of the second connection region in the first direction. A dimension of the second non-connection region in the second direction may be larger than the dimension of the second non-connection region in the first direction. The continuous fibers contained in the intermediate member may include first intermediate continuous fibers extending in the first direction. Thus, the connection region and the non-connection region of the first skin member are arranged alternately in the first direction, the connection region and the non-connection region of the second skin member are arranged alternately in the first direction, the second direction corresponds to a longitudinal direction of the connection and non-connection regions, and the first direction corresponds to a longitudinal direction of the continuous fibers in the intermediate member. This makes it possible to enhance the strength of the panel member to withstand out-of-plane compression (i.e., pressing force that will crush the intermediate member).

The continuous fibers contained in the intermediate member may further include second intermediate continuous fibers extending in a direction intersecting the first direction. The first intermediate continuous fibers may be disposed in an area of the intermediate member located between the first skin member and the second intermediate continuous fibers and adjacent to the first skin member. This enables the intermediate member to have, at its outer area, strength to withstand out-of-plane compression described above. Areas of the intermediate member that change from areas connected to the first skin member to areas (i.e., non-connection areas) not connected to the first skin member (which are, for example, corner portions of the intermediate area when it has a corrugated shape) are reinforced so as to facilitate maintaining the shape of the intermediate member. Consequently, the panel member is able to exhibit enhanced strength to withstand out-of-plane compression.

The first skin member may contain: first skin continuous fibers extending in the first direction; and second skin continuous fibers extending in a direction intersecting the first direction. The first skin continuous fibers may be disposed in an area of the first skin member located opposite to the intermediate member. The second skin continuous fibers may be disposed between the first skin continuous fibers and the intermediate member. The first skin member thus has, at its outer area, strength to withstand out-of-plane compression described above. This produces particularly remarkable effects on local stress applied to the first skin member.

The above-described panel member may include any of intermediate members of various shapes. A cross-sectional shape of the intermediate member orthogonal to a second direction perpendicular to the first direction may be a corrugated shape. Increasing the connection regions of the skin members provides a structure resistant to stress applied to the skin members from outside. Reducing a corrugate cycle (i.e., the number of pitches) by relatively increasing the connection regions enables weight reduction.

The intermediate member may include sub-members arranged in the first direction and separated from each other in the first direction. A cross-sectional shape of each of the sub-members orthogonal to a second direction perpendicular to the first direction may be a hat shape. This shape also makes it possible to achieve effects equivalent to those achieved by the corrugated cross-sectional shape. The hat shape makes the non-connection region of one of the skin members larger than in the corrugated cross-sectional shape, and thus enables further weight reduction.

A panel member manufacturing method disclosed herein is a method for manufacturing a panel member by connecting a continuous fiber-containing intermediate member to a first skin member and a second skin member each containing thermoplastic resin and having a sheet shape. The intermediate member is disposed between the first skin member and the second skin member. The intermediate member is provided with vacant regions defined by recesses and protrusions arranged in the first direction and extending in a second direction perpendicular to the first direction. The manufacturing method includes: a recess and protrusion heating step for performing a heating process on the recesses and the protrusions of the intermediate member; a skin member placing step for placing the first skin member on a first side in a third direction relative to the intermediate member, and placing the second skin member on a second side in the third direction relative to the intermediate member, the third direction being perpendicular to the first direction and the second direction; and a skin member connecting step for, after the skin member placing step, connecting the first skin member to the protrusions and connecting the second skin member to the recesses.

The recess and protrusion heating step may include: an abutment placing sub-step for placing abutment members in the vacant regions and bringing the abutment members into abutment with the intermediate member; and an abutment heating sub-step for heating the abutment members. Employing this manufacturing method makes it possible to perform the process of connecting the first skin member and the intermediate member and connecting the second skin member and the intermediate member while keeping the abutment members in abutment with the intermediate member. Skillfully controlling the heating process on the abutment members makes it possible to perform the connecting process while maintaining suitable temperature conditions, which leads to stabilization of product quality.

The skin member placing step may include: a skin supporting sub-step for supporting the first skin member with a first supporting member; and a skin stretching sub-step for applying a tensile load to the first skin member in the first direction. The skin member placing step may include: a skin supporting sub-step for supporting the second skin member with a second supporting member; and a skin stretching sub-step for applying a tensile load to the second skin member in the first direction. The manufacturing method is able to place the skin members under predetermined tension and appropriately connect the regions of the skin members. Accordingly, a failure, such as a connection failure, is avoidable, with the result that the panel member of high quality is manufacturable.

The skin member connecting step may involve continuing to heat the abutment members after the abutment heating sub-step. This makes it possible to prevent an excessive decrease in temperature caused by heat dissipation and avoid a failure, such as a connection failure.

The skin member connecting step may include an abutment restraining sub-step for applying a restraining load to the abutment members, the restraining load preventing expansion of the abutment members in the first direction. Thus, deformation of the abutment members caused by a load applied during the connecting process, for example, is preventable. Unnecessary deformation of the intermediate member is preventable, with the result that the quality of the panel member is maintainable. The phrase "applying a restraining load" may be adequately used herein to refer to a situation in which when the abutment members are expanding, a restraining load is resultantly applied to the abutment members. Accordingly, a situation where the abutment members are under predetermined restraint will suffice.

The manufacturing method may include an intermediate member providing step for providing the intermediate member. The intermediate member providing step may include a forming sub-step for forming the intermediate member such that either the recesses or the protrusions have shapes whose dimensions in the first direction gradually decrease in the second direction, and the others of the recesses and the protrusions have shapes whose dimensions in the first direction gradually increase in the second direction. The skin member connecting step may include: a pressing and cooling sub-step for cooling the first skin member, the second skin member, and the intermediate member; and an abutment removing sub-step for removing the abutment members from the vacant regions in the first direction.

The recess and protrusion heating step may include an abutment placing sub-step for placing abutment members in the vacant regions and bringing the abutment members into abutment with the intermediate member. The skin member connecting step may include a pressing and connecting sub-step for connecting the first skin member to the protrusions while pressing the first skin member thereto, and connecting the second skin member to the recesses while pressing the second skin member thereto. The pressing and connecting sub-step may be performed after the abutment placing sub-step. The manufacturing method involves pressing the skin members against the intermediate member, with the abutment members located in the vacant regions, and is thus able to press the non-connection regions of the skin members against the abutment members similarly to the connection regions of the skin members to be connected to the intermediate member. Accordingly, the skin members are pressed substantially uniformly, resulting in the panel member of high quality.

The skin member connecting step may include: a pressing and connecting sub-step for, with a pressing member, connecting the first skin member to the protrusions while pressing the first skin member thereto and/or connecting the second skin member to the recesses while pressing the second skin member thereto; and a pressing and cooling sub-step for cooling the pressing member. The manufacturing method involves continuing the pressing process also during the cooling process in consideration of influences on the connecting process. This makes it possible to sufficiently achieve elaborate effects, including a pressure feedback action. In the event of sudden temperature rise and drop, in particular, unexpected influences of such temperature changes are considerably reducible.

In addition to the above, the recess and protrusion heating step may include: an abutment placing sub-step for placing abutment members in the vacant regions and bringing the abutment members into abutment with the intermediate member; and an abutment heating sub-step for heating the abutment members.

The skin member connecting step may include a heating member placing sub-step for placing a heating member between the first skin member and the intermediate member so as to heat the first skin member and the intermediate member with the heating member, and/or placing a heating member between the second skin member and the intermediate member so as to heat the second skin member and the intermediate member with the heating member.

A panel member manufacturing apparatus disclosed herein is a manufacturing apparatus for manufacturing a panel member by connecting a continuous fiber-containing intermediate member to a first skin member and a second skin member each containing thermoplastic resin and having a sheet shape. The intermediate member is disposed between the first skin member and the second skin member. The intermediate member is provided with vacant regions defined by recesses and protrusions arranged in the first direction and extending in a second direction perpendicular to the first direction. The manufacturing apparatus includes: a first mold to place the first skin member on a first side in a third direction relative to the intermediate member and support the first skin member such that the first skin member is movable toward a second side in the third direction, the third direction being perpendicular to the first direction and the second direction; a second mold to place the second skin member on the second side in the third direction relative to the intermediate member and support the second skin member such that the second skin member is movable toward the first side in the third direction; abutment members to be placed in the vacant regions of the intermediate member and brought into abutment with the recesses and the protrusions; and a restraining member to restrain movement of the abutment members in the first direction.

### EFFECTS OF INVENTION

The present invention is able to provide panel members each of which is light in weight and has high strength to withstand an impact from outside. The present invention is also able to provide manufacturing methods and manufacturing apparatuses that are capable of successfully manufacturing such panel members.

### BRIEF DESCRIPTION OF DRAWINGS

FIG. 1(a) is a schematic perspective view of a panel member according to a first embodiment, which is placed on supporting rails.
FIG. 1(b) is a schematic cross-sectional view of the panel member taken along an X-Z plane of FIG. 1(a).
FIG. 2(a) is a schematic perspective view illustrating a longitudinal direction of continuous fibers in an outermost layer included in an upper skin member of the panel member according to the first embodiment.
FIG. 2(b) is a schematic perspective view illustrating a longitudinal direction of continuous fibers in an outermost layer included in an intermediate member of the panel member.
FIGS. 3(a) to 3(c) are schematic cross-sectional views illustrating structures and effects of the panel member according to the first embodiment.
FIGS. 4(a) to 4(d) are schematic cross-sectional views of the panel member according to the first embodiment, which is secured to the supporting rails by various means.
FIG. 5(a) is a schematic cross-sectional view illustrating a structure of a panel member according to a second embodiment.
FIG. 5(b) is a schematic cross-sectional view illustrating a structure of a panel member according to a third embodiment.
FIG. 6 is a schematic perspective view of a panel member according to a fourth embodiment, which is placed on supporting rails.
FIG. 7 is a flow chart illustrating steps included in a panel member manufacturing method.
FIG. 8(a) is a schematic cross-sectional view of the panel member, illustrating a recess and protrusion heating step.
FIG. 8(b) is a schematic cross-sectional view of the panel member, illustrating a skin member placing step.
FIGS. 9(a) to 9(c) are schematic cross-sectional views of the panel member, illustrating a skin member connecting step.
FIG. 10 is a schematic perspective view illustrating a panel member according to an alternative embodiment and a method for manufacturing the panel member.

### DESCRIPTION OF EMBODIMENTS

With reference to the drawings, embodiments of panel members, panel member manufacturing methods, and panel member manufacturing apparatuses will be described. The following description first discusses embodiments of panel members and then discusses embodiments of panel member manufacturing methods and manufacturing apparatuses.

Unless otherwise specified, the term "X direction" as used in the following description subsumes an X direction illustrated in the drawings and a direction opposite thereto. Similarly, the term "Y direction" subsumes a Y direction illustrated in the drawings and a direction opposite thereto, and the term "Z direction" subsumes a Z direction illustrated in the drawings and a direction opposite thereto. The term "correspond" subsumes not only a strict correspondence but also an approximate correspondence.

### First Embodiment of Panel Member

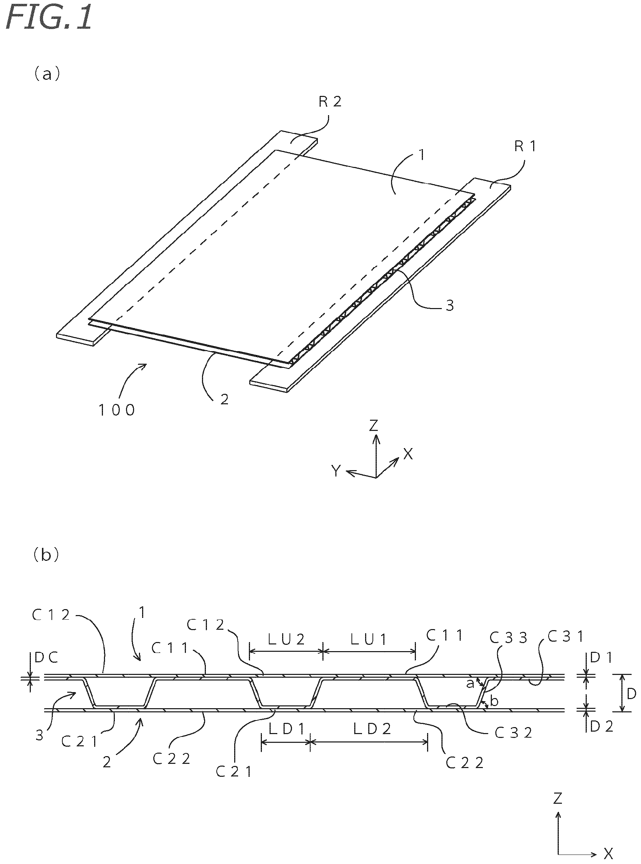

FIG. 1(a) is a schematic perspective view of a panel member 100 according to a first embodiment. The panel member 100 includes: a first skin member 1 and a second skin member 2 each containing thermoplastic resin and having a sheet shape; and an intermediate member 3 containing continuous fibers and interposed between the first skin member 1 and the second skin member 2. First and second ends of the panel member 100 in the Y direction are each supported by an associated one of supporting rails R1 and R2 extending in the X direction. The panel member 100 is thus installed in the form of flooring.

In the present embodiment, the first skin member 1 is disposed over the intermediate member 3. The first skin member 1 is used as an upper skin member of the panel member 100. The first skin member 1 is a carbon fiber reinforced composite provided by blending carbon fibers (e.g., PAN carbon fibers) into thermoplastic resin (e.g., polyphenylene sulfide or ketonic resin). Similarly, the second skin member 2 is a carbon fiber reinforced composite provided by blending carbon fibers into thermoplastic resin. The intermediate member 3 is made of a corrugated material whose recesses and protrusions are arranged alternately in the X direction. The recesses and the protrusions are continuous with each other in the X direction and are thus integral with each other. The recesses and the protrusions each extend in the Y direction. Similarly to the skin members 1 and 2, the intermediate member 3 is a carbon fiber reinforced composite provided by blending carbon fibers into thermoplastic resin. The panel member 100 includes the composites described above and thus exhibits light weight and high strength and rigidity. The panel member 100 contains carbon fibers and thus exhibits high flame resistance.

The shape and other features of the panel member 100 will be described with reference to FIG. 1(b). FIG. 1(b) is a schematic cross-sectional view of the panel member 100 taken along an X-Z plane of FIG. 1(a). In other words, FIG. 1(b) is a schematic cross-sectional view of the panel member 100 taken in a direction orthogonal to the Y direction. For the sake of convenience of description, the supporting rails R1 and R2 are not illustrated in FIG. 1(b).

The first skin member 1 includes: connection regions C11 connected to the intermediate member 3; and non-connection regions C12 separated from the intermediate member 3 and not connected to the intermediate member 3. The connection regions C11 and the non-connection regions C12 are arranged alternately in the X direction and continuous with each other. A length of each connection region C11 in the X direction is represented as LU1, and a length of each non-connection region C12 in the X direction is represented as LU2. The length LU1 is longer than the length LU2. The connection regions C11 are larger than the non-connection regions C12 in the X direction. A thickness D1 of the first skin member 1 is substantially uniform. Although the thickness D1 is 0.8 mm in this embodiment, the thickness D1 may be of any other size. The thickness D1 may be suitably changed, for example, in the range of between about 0.4 mm and about 1.2 mm.

The second skin member 2 includes: connection regions C21 connected to the intermediate member 3; and non-connection regions C22 separated from the intermediate member 3 and not connected to the intermediate member 3. The connection regions C21 and the non-connection regions C22 are arranged alternately in the X direction and continuous with each other. A length of each connection region C21 in the X direction is represented as LD1, and a length of each non-connection region C22 in the X direction is represented as LD2. The length LD2 is longer than the length LD1. The non-connection regions C22 are larger than the connection regions C21 in the X direction. The length LD2 of each non-connection region C22 differs from the length LU2 of each non-connection region C12 of the first skin member 1. In the present embodiment, the length LD2 of each non-connection region C22 of the second skin member 2 is longer than the length LU2 of each non-connection region C12 of the first skin member 1. A thickness D2 of the second skin member 2 is substantially uniform. Although the thickness D2 is 0.6 mm in this embodiment, the thickness D2 may be of any other size. The thickness D2 may be suitably changed, for example, in the range of between about 0.4 mm and about 1.2 mm.

The intermediate member 3 includes: upper surface portions C31 connected to the connection regions C11 of the first skin member 1; lower surface portions C32 connected to the connection regions C21 of the second skin member 2; and connectors C33 connecting the upper surface portions C31 to the lower surface portions C32. The upper surface portions C31 are thermally welded to the connection regions C11 of the first skin member 1. The lower surface portions C32 are thermally welded to the connection regions C21 of the second skin member 2. The upper surface portions C31, the connectors C33, and the lower surface portions C32 are integral with each other. The intermediate member 3 has a corrugated cross-sectional shape in which the upper surface portions C31, the connectors C33, and the lower surface portions C32 are continuous and integral with each other in the X direction. A cross-sectional shape of the intermediate member 3 orthogonal to the Y direction is corrugated. The intermediate member 3 has such a corrugated cross-sectional shape and is thus provided with vacant regions V1 and V2. The intermediate member 3 has a shape formed by extending the cross-sectional shape in the Y direction. As previously described, the connection regions C11 and the connection regions C21 differ in size from each other, with the result that the upper surface portions C31 are larger than the lower surface portions C32. An inclination angle a of each connector C33 with respect to the first skin member 1 and an inclination angle b of each connector C33 with respect to the second skin member 2 are each set at 70 degrees. The inclination angles a and b are required to be in the range of between 45 degrees and 90 degrees, and are particularly preferably in the range of about 60 degrees and about 75 degrees. In the present embodiment, the panel member 100 has a thickness D of 10 mm.

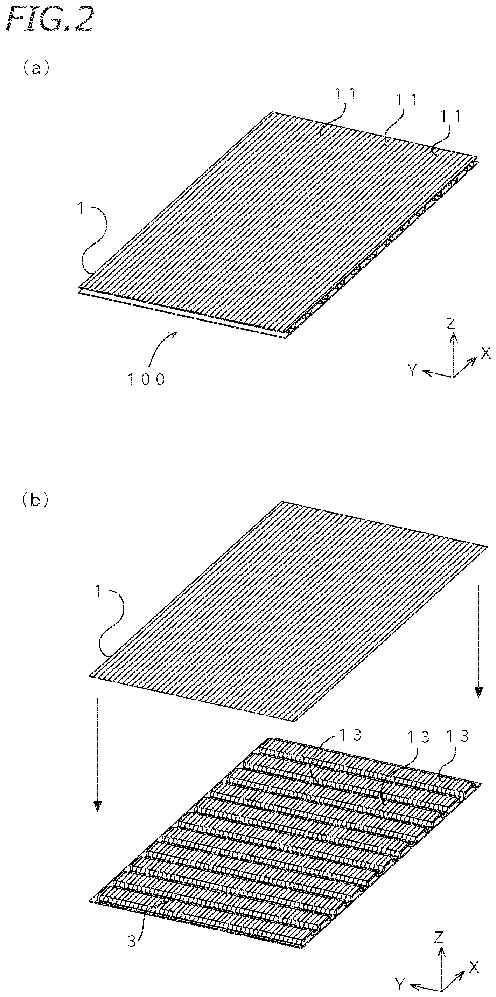

Referring to FIG. 2, orientations of carbon fibers (i.e., continuous fibers) in the panel member 100 will be described below. In FIG. 2, carbon fibers are illustrated as being included in the schematic perspective view of FIG. 1(a) for the sake of convenience of description.

The first skin member 1 includes four layers in the Z direction. Carbon fibers 11 are contained in each of these layers. Directions of the carbon fibers 11 are 0 degrees, 90 degrees, 90 degrees, and 0 degrees in this order from bottom to top. The directions of the carbon fibers are represented as angles with respect to the X direction. In the first skin member 1, the carbon fibers 11 have a biaxial orientation. As illustrated in FIG. 2(a), an uppermost layer of the first skin member 1 serving as an upper skin member is provided with the carbon fibers 11 extending in the X direction. In the uppermost layer of the first skin member 1, the X direction corresponds to a longitudinal direction of the carbon fibers 11. In this embodiment, the content of the carbon fibers 11 in the first skin member 1 is 60 percent by mass. The content of the carbon fibers 11 in the first skin member 1, however, may be suitably changed, for example, in the range of between 40 percent by mass and 70 percent by mass, and is particularly preferably in the range of between 55 percent by mass and 70 percent by mass.

The second skin member 2 serving as a lower skin member includes three layers in the Z direction. The carbon fibers 11 are contained in each of these layers. Directions of the carbon fibers are 90 degrees, 0 degrees, and 90 degrees in this order from bottom to top. In the second skin member 2, the carbon fibers 11 have a biaxial orientation. Although not illustrated, the Y direction corresponds to the longitudinal direction of the carbon fibers 11 in an uppermost layer (i.e., an uppermost area) of the second skin member 2 unlike in the uppermost layer of the first skin member 1. In this embodiment, the content of the carbon fibers 11 in the second skin member 2 is 60 percent by mass. The content of the carbon fibers 11 in the second skin member 2, however, may be suitably changed, for example, in the range of between 40 percent by mass and 70 percent by mass, and is particularly preferably in the range of between 55 percent by mass and 70 percent by mass.

The intermediate member 3 includes four layers in the Z direction. Carbon fibers 13 are contained in each of these layers. Directions of the carbon fibers are 0 degrees, 90 degrees, 90 degrees, and 0 degrees in this order from bottom to top. In the intermediate member 3, the carbon fibers 13 have a biaxial orientation. FIG. 2(b) illustrates the intermediate member 3 and the first skin member 1 detached from the intermediate member 3. As illustrated in FIG. 2(b), the X direction corresponds to a longitudinal direction of the carbon fibers 13 in an uppermost layer (i.e., an uppermost area) of the intermediate member 3. The uppermost layer of the intermediate member 3 is an outermost layer located closest to the first skin member 1. As previously mentioned, the corrugated cross-sectional shape of the intermediate member 3 is extended in the Y direction. The carbon fibers 13 whose longitudinal direction corresponds to the X direction are substantially orthogonal to the extension direction of the corrugated cross-sectional shape (i.e., the Y direction). Because these carbon fibers 13 oriented at 0 degrees are included in corrugated areas (i.e., the recesses and the protrusions), the panel member 100 is able to exhibit high rigidity to withstand a compressive force applied thereto from outside. The content of the carbon fibers 13 in the intermediate member 3 is also 60 percent by mass. The content of the carbon fibers 13 in the intermediate member 3, however, may be suitably changed, for example, in the range of between 40 percent by mass and 70 percent by mass, and is particularly preferably in the range of between 55 percent by mass and 70 percent by mass.

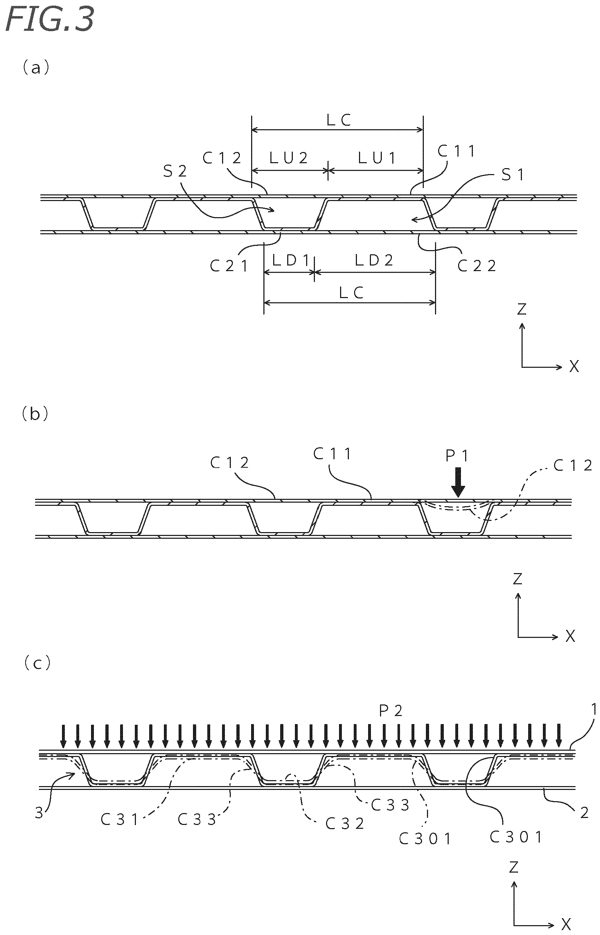

As illustrated in FIG. 3(a), within each pitch LC of the corrugated shape (i.e., a length of each pair of the recess and the protrusion in the X direction), LU1 > LU2 in the first skin member 1, and LD1 < LD2 in the second skin member 2. LU1 > LD1 for the connection regions C11 and C21, and LU2 < LD2 for the non-connection regions C12 and C22. Within each pitch LC, not only right and left sides of the corrugated shape but also upper and lower sides of the corrugated shape are asymmetrical on an X-Z plane. Such a shape for each pitch LC of the intermediate member 3 is repeated continuously in the X direction. A hollow portion defined by each protrusion of the intermediate member 3 will be referred to as a "mountain-shaped hollow portion S1", and a hollow portion defined by each recess of the intermediate member 3 will be referred to as a "valley-shaped hollow portion S2". The length LU1 of each connection region C11 is longer than the length LU2 of each non-connection region C12, with the result that each mountain-shaped hollow portion S1 is larger than each valley-shaped hollow portion S2. Because the length LU1 of each connection region C11 is relatively long, the number of pitches of the corrugated shape is small. This makes it possible to reduce the required volume of the intermediate member 3, enabling a reduction in the weight of the panel member 100. The panel member 100 according to the present embodiment, in particular, is used as cabin flooring in airplanes. Accordingly, effects achieved as a result of weight reduction mentioned above are significant in view of the number and size of panel members 100 to be used.

The panel member 100 according to the present embodiment, whose first skin member 1 serves as the upper skin member, may be under a local load, examples of which include a load P1 applied to the non-connection region C12 of the first skin member 1 by a high-heeled shoe or a falling object as illustrated in FIG. 3(b). Because each non-connection region C12 is smaller than each connection region C11, the present embodiment is able to reduce the degree of deflection of the first skin member 1 (see the alternate long and short dash lines) when such a local load is applied thereto. In the first skin member 1, a proportion occupied by the connection regions C11 is larger than a proportion occupied by the non-connection regions C12. This makes it possible to reduce the possibility of application of the load P1 to the non-connection regions C12. In the first skin member 1, the carbon fibers in the uppermost layer extend in the X direction. Accordingly, the carbon fibers in the uppermost layer are able to reduce the degree of deflection and enhance durability to withstand an impact load. The first skin member 1 has the four-layer structure and is thus larger in thickness and stronger in biaxial orientation than the second skin member 2 having the three-layer structure. Consequently, the first skin member 1 according to the present embodiment, which serves as the upper skin member, has a desired level or higher level of strength to withstand, for example, an impact from above.

The panel member 100 according to the present embodiment also has high durability to withstand out-of-plane compression. As illustrated in FIG. 3(c), when a pressure P2 is applied to the first skin member 1 from above, the intermediate member 3 receives the pressure P2 through the first skin member 1. The intermediate member 3 deforms as indicated by the alternate long and short dash lines, with the result that the panel member 100 enters a compressed state in the Z direction. The intermediate member 3, however, has the four-layer structure and contains the biaxially oriented carbon fibers, with the result that the panel member 100 would be able to exhibit high durability if the panel member 100 is in the compressed state. In the uppermost layer of the intermediate member 3 located closest to the first skin member 1, the carbon fibers 13 are oriented at 0 degrees (see FIG 2(b)). This also enables the panel member 100 to exhibit high durability. The intermediate member 3 contains the carbon fibers in its uppermost layer and thus reinforces corner portions C301 (or specifically, areas that change from areas connected to the first skin member 1 to areas (i.e., non-connection areas) not connected to the first skin member 1). This facilitates maintaining a shape of the first skin member 1 and thus facilitates maintaining a shape of an entirety of the panel member 100. The present embodiment provides high strength to withstand out-of-plane compression mentioned above.

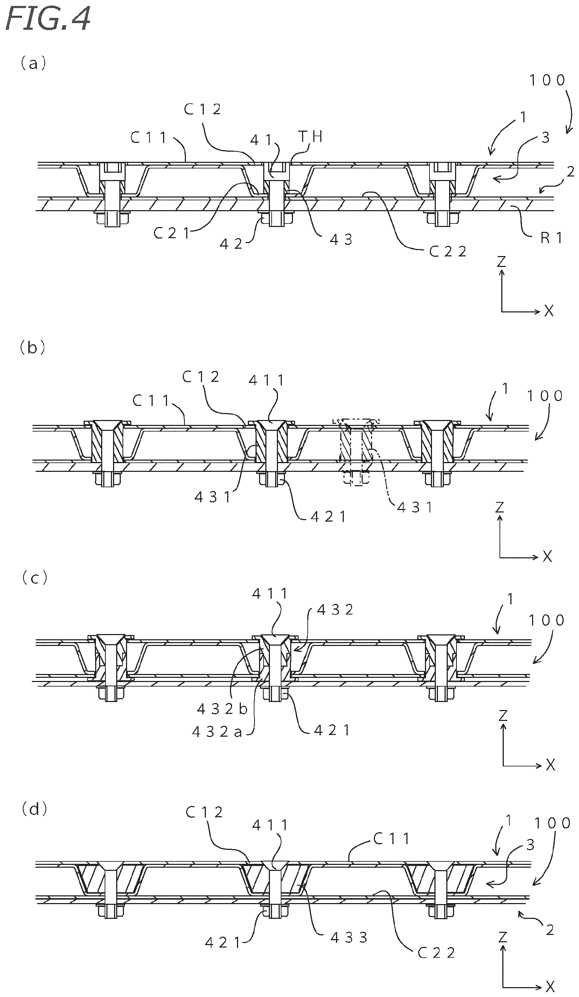

Referring to FIG. 4, the following description discusses how the panel member 100 is supported by the supporting rails R1 and R2 each made of metal. FIG. 4 provides schematic cross-sectional views each taken along an X-Z plane similarly to FIG 3.

As illustrated in FIG. 4(a), the panel member 100 is secured to the supporting rail R1 with bolts 41 and nuts 42. The panel member 100 is similarly secured to the supporting rail R2. Shaft portions of the bolts 41 are provided with spacers 43. The non-connection regions C12 of the first skin member 1 are provided with through holes TH for the bolts 41 and the spacers 43. The second skin member 2, the intermediate member 3, and the supporting rail R1 are also provided with through holes at positions corresponding to the through holes TH (or specifically, positions vertically under the through holes TH). The bolts 41, which are inserted into these through holes, and the nuts 42 function as securing means for securing the panel member 100 to the supporting rail R1. In the present embodiment, the spacers 43 make heads of the bolts 41 flush with the first skin member 1. The heads of the bolts 41 do not project from the first skin member 1. Accordingly, the panel member 100 provides a flat floor surface with no irregularities when used as flooring.

Areas of the panel member 100 located under the non-connection regions C12 are two-layer structure areas including: the connection regions C21 of the second skin member 2; and regions of the intermediate member 3 connected to the connection regions C21. The bolts 41 are fastened to the non-connection regions C12 of the first skin member 1. Thus, fastening forces for the bolts 41 and the nuts 42 are exerted on the supporting rail R1 and the two-layer structure areas provided by the second skin member 2 and the intermediate member 3. The fastening forces for the bolts 41, which are exerted on the two-layer structure areas, include, for example, forces resulting from stress produced in each of the two-layer structure areas and transmitted in a planar direction through the bolts 41. With the fastening forces, the panel member 100 is secured to the supporting rail R1. If the bolts 41 are fastened to the connection regions C11 of the first skin member 1, the fastening forces for the bolts 41 and the nuts 42 will be exerted on single-layer structure areas provided by the non-connection regions C22 of the second skin member 2. Unlike this arrangement, the present embodiment involves causing the fastening forces for the bolts 41 and the nuts 42 to be exerted on the two-layer structure areas, resulting in increases in the fastening forces. The bolts 41, the nuts 42, the spacers 43, and the through holes TH, for example, are provided at more than one location as illustrated in FIG. 4(a). These components are provided at predetermined intervals not only in a right-left direction (i.e., the X direction) but also in a depth direction (i.e., the Y direction) in FIG. 4(a). This makes it possible to achieve a high fastening force at each location and thus makes it possible to reduce the numbers of bolts 41 and nuts 42 to be used for the entirety of the panel member 100. Positions at which the bolts 41 and the nuts 42 are to be provided, however, are not limited to the illustrated positions. The bolts 41 may be fastened to the connection regions C11 of the first skin member 1 (see the chain double-dashed lines in FIG. 4(b)). The bolts 41 may each be fastened to an associated one of the connection regions C11 and the non-connection regions C12. The bolts 41 do not necessarily have to be provided at substantially central portions of the non-connection regions C12 as illustrated in FIG. 4(a). The same goes for the connection regions C11. The bolts 41 may be provided in the connectors C33.

Other means may be used as securing means for securing the panel member 100 to the supporting rails R1 and R2. Means illustrated, for example, in FIG. 4(b), FIG. 4(c), or FIG. 4(d) may be used as the securing means.

FIG. 4(b) illustrates an arrangement that involves using insert members 431 instead of the spacers 43. Bolts 411 and nuts 421 used in this arrangement serve as securing means for securing the panel member 100 to the supporting rail R1 together with the insert members 431. The bolts 411 are in engagement with the insert members 431. As illustrated in FIG. 4(b), the insert members 431 are in engagement with each of the first skin member 1, the second skin member 2, and the intermediate member 3. The insert members 431 are provided in the non-connection regions C12 of the first skin member 1. In the arrangement that involves using the insert members 431, fastening forces for securing the panel member 100 to the supporting rail R1 are generated by: stress produced in the two-layer structure areas provided by the intermediate member 3 and the connection regions C21 of the second skin member 2; and stress produced in the non-connection regions C12 of the first skin member 1. The insert members 431 may be provided, for example, in the connection regions C11 instead of being provided in the non-connection regions C12 of the first skin member 1. In this case, fastening forces are generated by: stress produced in two-layer structure areas provided by the intermediate member 3 and the connection regions C11 of the first skin member 1; and stress produced in the non-connection regions C22 of the second skin member 2. The fastening forces in this case are thus equivalent in magnitude to the fastening forces generated when the insert members 431 are provided in the non-connection regions C12 of the first skin member 1. If the bolts 411, the nuts 421, and the insert members 431 are provided in either the non-connection regions C12 or the connection regions C11 of the first skin member 1, similar effects would be achievable. Alternatively, these components may be provided in each of the regions C11 and C12.

As illustrated in FIG. 4(c), insert members 432 each having a unitized body structure including sub-members assembled to each other in a vertical direction (i.e., the Z direction) may be used instead of the insert members 431. The insert members 432 including the sub-members assembled to each other in this manner may be used when unitized body structures are more preferable than the insert members 431, which are illustrated in FIG. 4(b), depending on applications. This arrangement is also able to prevent heads of the insert members 432 and the bolts 411 from projecting from the first skin member 1.

Other than structures including the insert members 431 or the insert members 432, structures including cores 433 as illustrated in FIG. 4(d) may be utilized as the securing means that involves using the bolts 411 and the nuts 421 described above. In this case, the heads of the bolts 411 are allowed to be substantially flush with the first skin member 1 similarly to FIG. 4(a). The structures including the cores 433 may involve inserting bolts, each having its head located on the lower side, into the cores 433 from the second skin member 2 (i.e., from below in the vertical direction) instead of providing through holes in the first skin member 1. In this case, the use of the bolts securable at positions that do not reach the first skin member 1 makes it possible to allow the bolts to be substantially flush with a surface (i.e., an upper surface) of the first skin member 1. Because the cores 433 are fastened to the bolts 411, the cores 433 in the above-described example are disposed within spaces defined between the non-connection regions C12 of the first skin member 1 and the intermediate member 3. When the bolts 411 are provided in the connection regions C11 (see, for example, positions indicated by the chain double-dashed lines in FIG. 4(b)), however, the cores 433 may be disposed within spaces defined between the non-connection regions C22 of the second skin member 2 and the intermediate member 3.

The panel member 100 according to the present embodiment has the above-described structure containing thermoplastic resin and carbon fibers and is thus impact-resistant. Because the number of pitches of the intermediate member 3 is reduced, weight reduction is achievable. To enhance durability to withstand a compression load, the intermediate member 3 having a corrugated shape includes layers each containing carbon fibers in the form of continuous fibers. In the layers, the carbon fibers are at least biaxially orientated to substantially perpendicularly intersect a longitudinal direction of the corrugated shape. Because an uppermost one of the layers contains the carbon fibers oriented to substantially perpendicularly intersect the longitudinal direction of the corrugated shape, durability to withstand the compression load (i.e., out-of-plane compression) is remarkably high. In addition, skillfully combining the orientations of the carbon fibers in the layers as previously described makes it possible to increase the bending strength of the panel member 100. Similarly, each of the first skin member 1 and the second skin member 2 also includes layers containing at least biaxially oriented carbon fibers and is thus able to have enhanced bending strength. A longitudinal direction of the carbon fibers in an uppermost one of the layers of the first skin member 1, which is susceptible to an impact (or in particular, susceptible to a local impact), substantially perpendicularly intersects the longitudinal direction of the corrugated shape. This makes it possible to achieve high durability to withstand an impact. When the panel member 100 is used for a purpose that is likely to make the second skin member 2 susceptible to an impact such as one mentioned above, the corrugated shape of the intermediate member 3 and/or the arrangement of the carbon fiber-containing layers in each of the first skin member 1, the second skin member 2, and the intermediate member 3, for example, may be turned upside down or may be changed suitably in accordance with the purpose of use.

### Second Embodiment of Panel Member

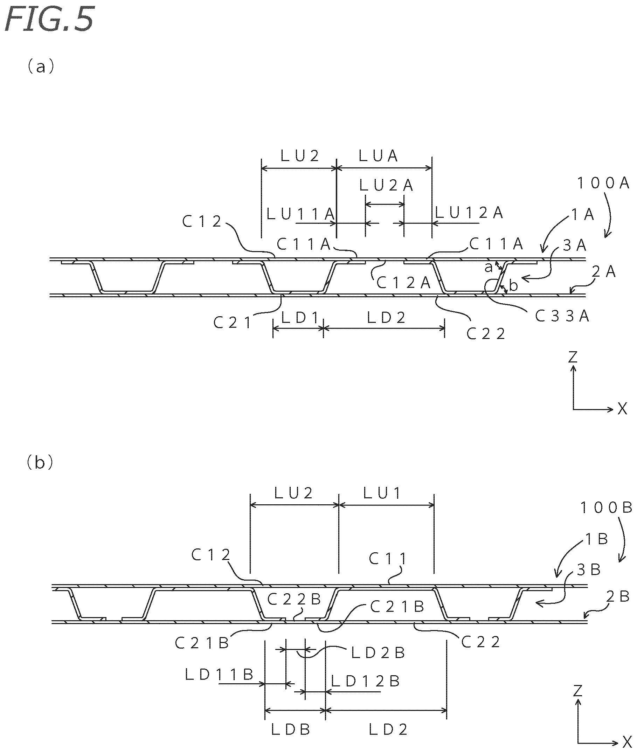

FIG. 5(a) schematically illustrates a cross-sectional shape of a panel member 100A according to a second embodiment. In the panel member 100A according to the present embodiment, an intermediate member 3A is hat-shaped. The intermediate member 3A includes sub-members arranged in an X direction. These sub-members are located away from each other in the X direction. The sub-members each have a hat-like cross-sectional shape orthogonal to a Y direction. A first skin member 1A is provided with non-connection regions C12A each located between an associated pair of connection regions C11A. The pairs of connection regions C11A and the non-connection regions C12A face non-connection regions C22 of a second skin member 2. In the first skin member 1A, the pairs of connection regions C11A and the non-connection regions C12A are arranged alternately with non-connection regions C12 in the X direction. In the second skin member 2A, connection regions C21 connected to the intermediate member 3A are arranged alternately with the non-connection regions C22 in the X direction. A length LU2 and a length LU2A of the first skin member 1A are each different from a length LD2 of the second skin member 2A.

In the present embodiment, the first skin member 1A is provided with two types of non-connection regions, i.e., the non-connection regions C12 and C12A. The non-connection regions C12 face the connection regions C21 of the second skin member 2A. The length LU2 of each non-connection region C12 is substantially equal to the length LU2 (see FIG. 1(b)) of each non-connection region C12 described in the first embodiment. The length LU2A of each non-connection region C12A is shorter than the length LU2 of each non-connection region C12. Although lengths LU11A and LU12A of left and right ones of the connection regions C11A adjacent to each non-connection region C12A are equal to each other in this embodiment, the lengths LU11A and LU12A may be different from each other.

A length LD1 of each connection region C21 and the length LD2 of each non-connection region C22 in the second skin member 2A are respectively substantially equal to the lengths LD1 and LD2 described in the first embodiment. Inclination angles a and b of connectors C33A of the intermediate member 3A with respect to the first skin member 1A and the second skin member 2A are also respectively substantially equal to the inclination angles a and b described in the first embodiment.

Also in the panel member 100A, LU2 < LD2. Assuming that the sum of the length of each non-connection region C12A and the lengths of the connection regions C11A adjacent thereto in the first skin member 1A is represented as LUA (= LU11A + LU2A + LU12A), LUA > LD1. The panel member 100A according to the present embodiment is also able to achieve weight reduction and maintain bending strength at a high level. The panel member 100A has a carbon fiber-containing structure similar to that described in the first embodiment and is thus able to exhibit high durability to withstand an impact from outside while maintaining its bending strength at a high level.

### Third Embodiment of Panel Member

In the panel member 100A according to the second embodiment, the first skin member 1A includes two types of non-connection regions, i.e., the non-connection regions C12 and C12A. In a panel member 100B according to a third embodiment, which is illustrated in FIG. 5(b), a second skin member 2B includes two types of non-connection regions, i.e., non-connection regions C22 and C22B. In the third embodiment, an intermediate member 3B has a hat-like cross-sectional shape obtained by turning the hat-like cross-sectional shape described in the second embodiment upside down.

Also in the present embodiment, LU2 < LD2. Assuming that the sum of a length of each non-connection region C22B and lengths of connection regions C21B adjacent thereto in the second skin member 2B is represented as LDB (= LD11B + LD2B + LD12B), LDB < LU1. The panel member 100B according to the present embodiment is also able to achieve weight reduction and maintain bending strength at a high level. The panel member 100B has a carbon fiber-containing structure similar to that described in the first embodiment and is thus able to exhibit high durability to withstand an impact from outside while maintaining its bending strength at a high level.

When a first skin member 1B is an upper skin member, a proportion occupied by connection regions C11 in the first skin member 1B is preferably large. The panel member 100B according to the third embodiment is preferable because the proportion occupied by the connection regions C11 is larger than in the panel member 100A according to the second embodiment. The present embodiment is able to increase the length LU1 of each connection region C11 in the first skin member 1B so as to enhance durability to withstand an impact applied to the first skin member 1B. Besides, an arrangement may be made such that a non-connection region is provided in an intermediate area of each connection region C11 (e.g., such that a connection region C11A, a non-connection region C12A, and another connection region C11A are located side by side in this order as illustrated in FIG 5(a)), while the above-described various effects are maintainable.

### Fourth Embodiment of Panel Member

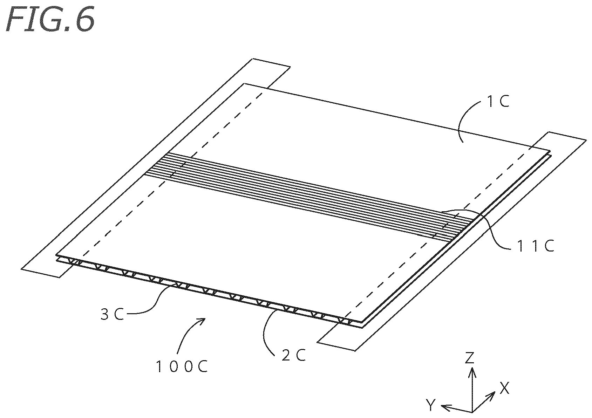

In the first to third embodiments, longitudinal directions of connection regions and non-connection regions in the intermediate members 3, 3A, and 3B correspond to the Y direction (see FIG. 1(a)), and the intermediate members 3, 3A, and 3B each include the carbon fiber-containing layers. FIG. 6 illustrates a panel member 100C according to a fourth embodiment.

In the panel member 100C according to the present embodiment, longitudinal directions of connection regions and non-connection regions in an intermediate member 3C correspond to an X direction. In each of a first skin member 1C and a second skin member 2C, connection regions and non-connection regions are arranged alternately in a Y direction. A length of each non-connection region of the first skin member 1C in the Y direction and a length of each non-connection region of the second skin member 2C in the Y direction are different from each other. Accordingly, similarly to the other embodiments, the present embodiment is able to provide high bending strength in a certain direction and high durability to withstand an external impact while achieving weight reduction.

In the panel member 100C, carbon fibers 11C are oriented to extend in the Y direction in an uppermost layer of the first skin member 1C as illustrated in FIG. 6. As previously mentioned, the first skin member 1C includes biaxially oriented layers and thus has predetermined durability to withstand an external impact. The same applies to the second skin member 2C and the intermediate member 3C. Orientations of the carbon fibers, for example, may be changed in accordance with desired bending strength and/or impact durability. When the various securing means (see FIG. 4) described in the first embodiment are to be used, the securing means may be arranged in the X direction. When intervals between the securing means are not regular intervals but irregular intervals or decided suitably in accordance with design and/or assembly constraints, for example, the present embodiment, which involves making the longitudinal directions of the connection regions and non-connection regions in the intermediate member 3C correspond to the X direction, is preferable because the present embodiment offers a high degree of flexibility in positioning of the securing means.

### Alternative Embodiment of Panel Member

Although the panel members 100, 100A, 100B, and 100C according to the embodiments have been described thus far, the type of thermoplastic resin contained in the first and second skin members is not limited to any particular type. Polyphenylene sulfide, ketonic resin, or other resin, for example, may be used. Mainly using a material having a high melting point makes it possible to provide high-strength resin. Alternatively, any material other than these materials may be used. The same type of thermoplastic resin may be used in an intermediate member.

As the above-mentioned carbon fibers, not only PAN carbon fibers but also PITCH carbon fibers, for example, are used. The continuous fibers, however, are not limited to carbon fibers but may be, for example, glass fibers (e.g., E glass fibers). The term "correspond" as used in the following phrase "the longitudinal direction of the continuous fibers corresponds to the X direction and the Y direction" subsumes not only a strict correspondence with the X direction and the Y direction but also a slight deviation from the X direction and the Y direction. This is because if the longitudinal direction of the continuous fibers is slightly deviated from the X direction and the Y direction, effects similar to those described above would be achievable.

In the foregoing embodiments, the skin members 1 and 2 and the intermediate member 3 each have a multilayer structure in which the layers containing the carbon fibers 11 or 13 are stacked on top of another. The number of layers to be stacked may be changed suitably. The orientations of the carbon fibers are not limited to a biaxial orientation.

Thermoplastic resin and continuous fibers to be contained in the first skin member, the second skin member, and the intermediate member, which are included in each panel member, may be different for each of the members or may be used in any suitable combination. In the foregoing embodiments, the first skin member and the intermediate member are welded to each other, and the second skin member and the intermediate member are welded to each other in each panel member that contains thermoplastic resin. The foregoing embodiments are thus characterized as being able to provide these members by using similar types of materials. This enables enhanced recyclability and a shorter manufacturing lead time. As similar types of materials (or identical materials) are used as described above, the above-described effects will be enhanced accordingly.

The panel members 100, 100A, 100B, and 100C according to the foregoing embodiments may be used as portions (e.g., central and/or end portions) of cabin flooring in airplanes. The panel members according to the present invention are naturally not limited to flooring or to components to be provided in cabins but may also be used for other portions, such as bodies of cargo compartments. The panel members according to the present invention are able to achieve the above-described various effects and thus do not necessarily have to be used for airplanes. The panel members according to the present invention may be used in various forms, examples of which include: other transporting machines; buildings or structures that require predetermined strength; and conveyed objects that are preferably light in weight.

When a thermoplastic resin-containing panel member such as one described above is to be manufactured, skillfully combining step(s) for a heating process and step(s) for a skin member and intermediate member connecting process, which are included in manufacturing processes for the panel member, exerts a great influence in terms of quality of the resulting panel member. The heating process is performed on the basis of melting points of skin members and an intermediate member. Upon completion of the heating process, the skin members and the intermediate member dissipate heat. If a transition is not made from the heating process to the connecting process with a suitable timing or if such a transition is not made promptly, the temperature(s) of the skin members and/or the intermediate member fall(s) well below the melting point(s), which may lead to a failure, such as a connection failure. It is desirable to not only simply increase the magnitude of connection strength but also eliminate any imbalance in the strength. A panel member provided with vacant regions arranged side by side, in particular, will face difficulty in having desired bending strength if pressing force is concentrated only on connection region(s).

After the heating process, a cooling process is required. Although manufacturing operations need to be performed speedily, an insufficient temperature drop and/or local residual heat, for example, may lead to a decrease in product quality. A panel member manufactured by connecting an intermediate member to skin members such that vacant regions are provided, in particular, is expected to be enhanced in mechanical strength and light in weight. To achieve these goals, sufficient connection strength is not enough, but detailed consideration has to be given to shapes and properties of the skin members and the intermediate member by which the vacant regions are to be formed. These points need to be taken into consideration until the cooling process is finished. This is because a panel member containing thermoplastic resin, which is easily subjected to secondary forming, will suffer an adverse effect on final quality if a sudden temperature change occurs.

These manufacturing processes offer high versatility in manufacture of panel members to be used for various purposes or various types of panel members. Importance is placed on proper use of method(s) for minutely controlling environmental conditions, such as temperatures and humidities, and/or process times depending on the purpose of use of panel members and/or the types of panel members. Accordingly, what are desired are manufacturing methods and manufacturing apparatuses that are able to successfully manufacture panel members by skillfully combining the process steps.

### First Embodiment of Panel Member Manufacturing Method and Manufacturing Apparatus

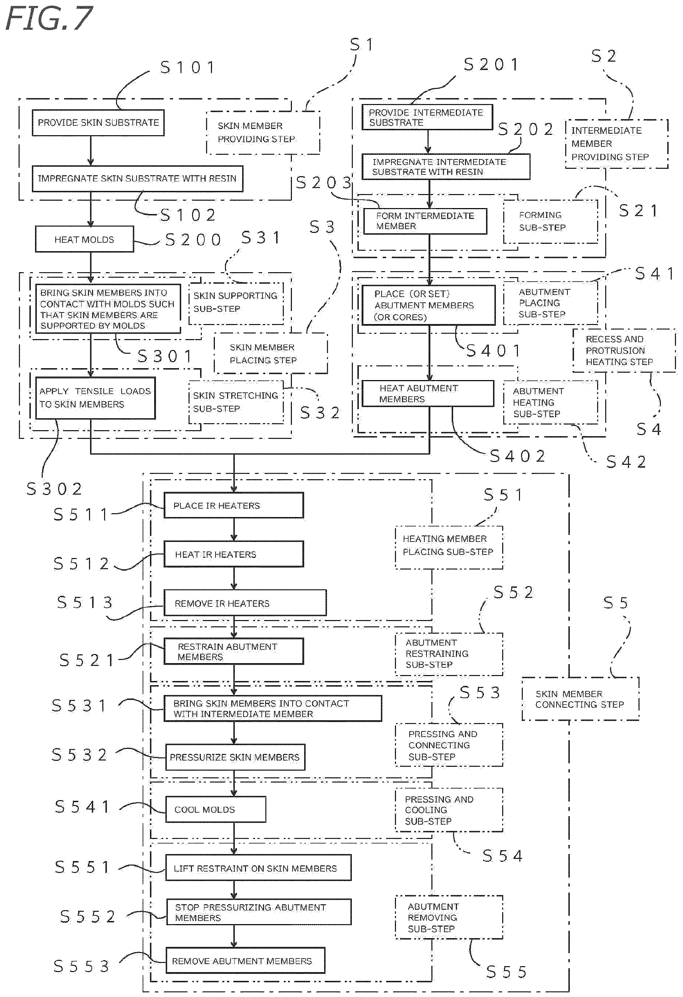

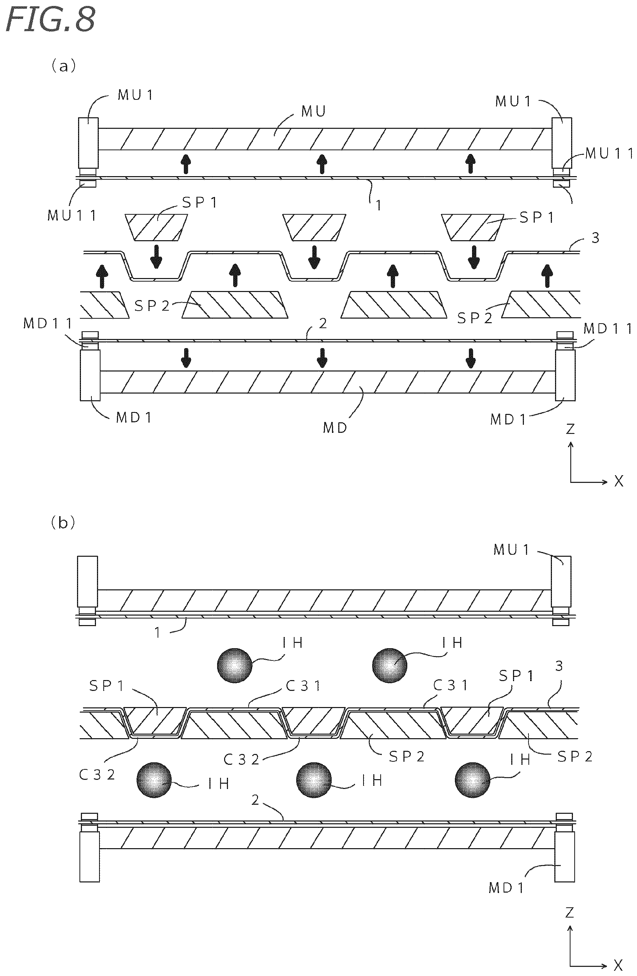

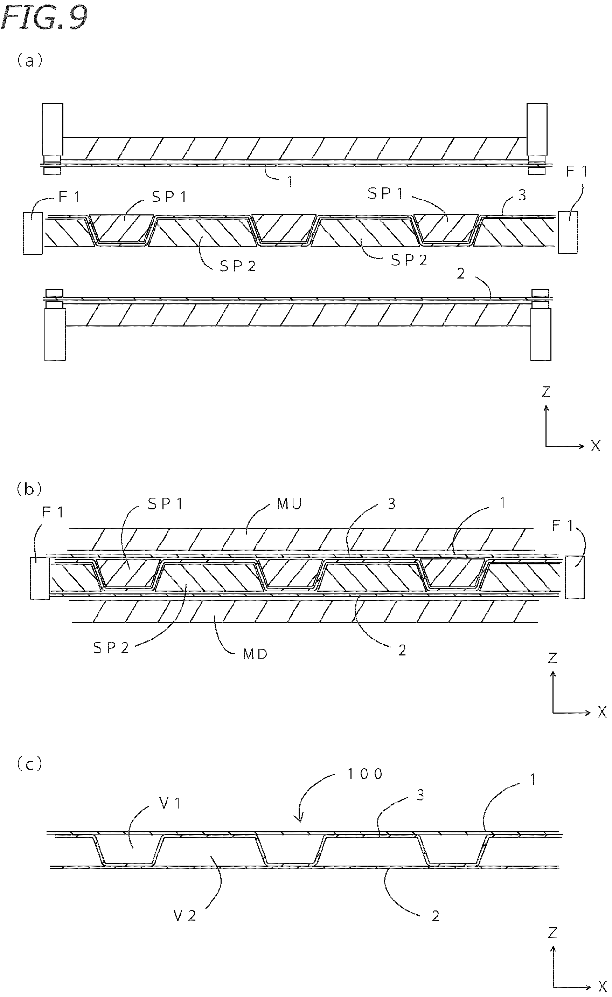

Embodiments of methods and apparatuses for manufacturing the panel member 100 will be described below. In the present embodiment, an apparatus that combines processing devices for use in steps included in a manufacturing method described below is used as a manufacturing apparatus for the panel member 100. FIG. 7 illustrates a flow chart of the steps included in the manufacturing method. FIGS. 8 and 9 provide schematic cross-sectional views illustrating how some of the steps are to be performed.

The manufacturing method according to the present embodiment includes: a skin member providing step S1 for providing a first skin member 1 and a second skin member 2 that are yet to be connected to an intermediate member 3; an intermediate member providing step S2 for providing the intermediate member 3 that is yet to be connected to the first skin member 1 and the second skin member 2; a skin member placing step S3 that is a preparatory operation for connection of the first skin member 1 and the second skin member 2 to the intermediate member 3; a recess and protrusion heating step S4 for heating recesses and protrusions of the intermediate member 3 having a corrugated shape; and a skin member connecting step S5 for connecting the intermediate member 3 to the first skin member 1 and the second skin member 2 after the skin member placing step S3 and the recess and protrusion heating step S4.

The skin member providing step S1 involves providing the above-mentioned first and second skin member 1 and 2 each having a sheet shape. The step S1 first involves fabricating a first skin substrate provided with four layers of carbon fibers 11 (S101). The step S1 then involves impregnating spaces defined between the carbon fibers 11 of the first skin substrate with thermoplastic resin (S102). This provides a sheet serving as the first skin member 1 and enables the carbon fibers 11 to enter a stable fixed state. Similarly, a second skin substate provided with three layers of the carbon fibers 11 is fabricated for the second skin member 2 (S101), and the second skin substrate is impregnated with thermoplastic resin (S102). This provides a sheet serving as the second skin member 2 and enables the carbon fibers 11 to enter a stable fixed state.

The intermediate member providing step S2 involves fabricating an intermediate substrate provided with four layers of carbon fibers 13 (S201) and then involves impregnating spaces defined between the carbon fibers 13 of the intermediate substrate with thermoplastic resin (S202). This provides a sheet containing the carbon fibers 13 and enables the carbon fibers 13 to enter a stable fixed state. Subsequently, the sheet is formed into a corrugated shape by using a pressing machine (S203), with the result that the intermediate member 3 is provided (forming sub-step S21).

After each of the skin substrates and the intermediate substrate has been impregnated with thermoplastic resin as described above, operations for connecting the first skin member 1 and the second skin member 2 to the intermediate member 3 are performable. As illustrated in FIG. 8(a), an upper mold MU and a lower mold MD are disposed one above the other in order to retain the first skin member 1 and the second skin member 2. Then, a heating process for each of the upper mold MU and the lower mold MD is started (S200). After the heating process has been started, a transition is made to the skin member placing step S3. The skin member placing step S3 involves performing: a skin supporting sub-step S31 for causing the skin members 1 and 2 to be respectively supported by the molds MU and MD; and a skin stretching sub-step S32 for applying a tensile load to each of the skin members 1 and 2 in a first direction (which is an X direction in the present embodiment). The skin supporting sub-step S31 involves supporting the first skin member 1 with the upper mold MU, and supporting the second skin member 2 with the lower mold MD (S301). In the present embodiment, the temperatures of the molds MU and MD are prevented from being excessively high at the time of the sub-step S31. The skin stretching sub-step S32 involves applying a tensile load to the first skin member 1 in the X direction, and applying a tensile load to the second skin member 2 in the X direction (S302).

The upper mold MU is provided with retainers MU1 to retain the first skin member 1. The lower mold MD is provided with retainers MD1 to retain the second skin member 2. The retainers MU1 include a mechanism to allow supporters MU11 for the first skin member 1 to be movable in an up-down direction and a horizontal direction relative to the upper mold MU. The retainers MD1 include a mechanism to allow supporters MD11 for the second skin member 2 to be movable in the up-down direction and the horizontal direction relative to the lower mold MD. Thus, in the skin member placing step S3, the first skin member 1 supported by the retainers MU1 is allowed to approach the heated upper mold MU until the first skin member 1 comes into contact therewith, and the second skin member 2 supported by the retainers MD1 is allowed to approach the heated lower mold MD until the second skin member 2 comes into contact therewith (S301). Accordingly, the first skin member 1 is heated by the upper mold MU, and the second skin member 2 is heated by the lower mold MD, with the result that the thermoplastic resin in the first skin member 1 and the second skin member 2 starts melting. The term "contact" as used herein not only refers to being in complete contact with a target, but also refers to being close to and slightly away from a target such that sufficient heat is receivable therefrom.

When the skin members 1 and 2 are respectively brought close to the molds MU and MD, the retainers MU1 and MD1 apply tensile loads to the first skin member 1 and the second skin member 2 in the X direction (S302). This makes it possible to apply predetermined tension to the thermoplastic resin that starts melting and thus successfully maintain the shapes of the skin members 1 and 2. The farther the distances of portions of the skin members 1 and 2 from the supporters MU11 and MD11, the more likely it is that a melting-induced reduction in rigidity will occur in the portions of the skin members 1 and 2. The application of tensile loads, however, makes it possible to prevent or limit the reduction in rigidity. Maintaining the rigidity at a certain level makes it possible to enhance the strength of connection of connection regions C11 and C21 to the intermediate member 3. Non-connection regions C12 and C22, which will not be connected to the intermediate member 3, are each allowed to have a desired shape. Accordingly, deformation (e.g., film material breakage, overlapping, or swelling) of the skin members 1 and 2 is preventable in the range of vacant regions V1 and V2 (i.e., the range of lengths LU2 and LD2 of the non-connection regions C12 and C22). The regions of the skin members 1 and 2 are able to maintain their predetermined lengths and are thus able to keep their desired shapes. Consequently, the application of tensile loads is preferable because it serves to improve the quality of the panel member 100.

The intermediate member 3 is subjected to steps for making the intermediate member 3 connectable to the skin members 1 and 2. The recess and protrusion heating step S4 involves performing an abutment placing sub-step S41 and an abutment heating sub-step S42. The abutment placing sub-step S41 involves placing abutment members (or cores) SP1 and SP2 in regions equivalent to the vacant regions V1 and V2, respectively (S401). Recesses and protrusions of the intermediate member 3 are thus filled with the abutment members (or cores) SP1 and SP2. The abutment members SP1 have shapes that are able to come into contact with: the non-connection regions C12 of the first skin member 1; lower surface portions C32 of the intermediate member 3; and connectors C33 (see FIG. 1(b)). The abutment members SP2 have shapes that are able to come into contact with: the non-connection regions C22 of the second skin member 2; upper surface portions C31 of the intermediate member 3; and the connectors C33 (see FIG. 1(b)). The abutment members SP1 and SP2 are metallic members having shapes extended in a Y direction (see FIG. 1(a)). The abutment members SP1 and SP2 are internally provided with cartridge heaters (not illustrated) extending in the Y direction. The abutment members SP1 and SP2 are configured to be substantially uniformly heatable across their entire lengths. The abutment heating sub-step S42 involves heating the abutment members SP1 and SP2 (S402) so as to start melting of the thermoplastic resin in the intermediate member 3. The intermediate member 3 according to the present embodiment contains carbon fibers (i.e., continuous fibers) having high thermal conductivity. The carbon fibers are biaxially oriented. If the intermediate member 3 is heated locally, heat would be transmittable to each region of the intermediate member 3. In the present embodiment, however, the abutment members SP1 and SP2 are configured to have the above-described shapes and to be substantially uniformly heatable in order to improve overall quality of the intermediate member 3, including maintaining stable rigidity.

Following the skin member placing step S3 and the recess and protrusion heating step S4, a transition is made to the skin member connecting step S5. The step S5 includes: a heating member placing sub-step S51 for heating the skin members 1 and 2 and the intermediate member 3 from between the skin members 1 and 2 and the intermediate member 3; an abutment restraining sub-step S52 for preventing movement and deformation of the abutment members SP1 and SP2; a pressing and connecting sub-step S53 for applying pressing force to the skin members 1 and 2 so as to bring the skin members 1 and 2 into contact with the intermediate member 3; a pressing and cooling sub-step S54 for providing cooling while applying the pressing force; and an abutment removing sub-step S55 for removing the abutment members SP1 and SP2 and/or other member(s) so as to release the pressing force applied to the intermediate member 3 and/or other member(s).

The heating member placing sub-step S51 involves placing, as illustrated in FIG. 8(b), infrared heaters IH (S511). Specifically, the infrared heaters IH are placed at positions located between the first skin member 1 and the intermediate member 3 and over the upper surface portions C31 of the intermediate member 3, and at positions located between the second skin member 2 and the intermediate member 3 and under the lower surface portions C32 of the intermediate member 3. The sub-step S51 subsequently involves starting heating of the infrared heaters IH (S512). As a result of this heating, every region of the skin members 1 and 2 and the intermediate member 3 is heated from both above and below (i.e., from both of positive and negative sides in a Z direction) and is thus substantially uniformly heated. As previously mentioned, the skin members 1 and 2 and the intermediate member 3 are heated in advance by the upper mold MU, the lower mold MD, and the abutment members SP1 and SP2. This enables a reduction in the time required for heating by the infrared heaters IH. Also during this process, tensile loads are being applied to the skin members 1 and 2 from the above-mentioned supporters MU11 and MD11. When a predetermined temperature or time has been reached, heating of the infrared heaters IH is stopped, and the infrared heaters IH are moved to positions away from between the skin members 1 and 2 and the intermediate member 3 (S513).

Then, a transition is made to the abutment restraining sub-step S52. The abutment restraining sub-step S52 involves placing, as illustrated in FIG. 9(a), restraining members F1 to restrain the abutment members SP1 and SP2, which are arranged in the X direction, from moving in the X direction (S521). A longitudinal direction of the restraining members F1 is identical to a longitudinal direction of the abutment members SP1 and SP2, and corresponds to the Y direction. The restraining members F1 are provided such that the restraining members F1 are in contact with the abutment members SP1 and SP2 in a continuous manner in the Y direction. This accordingly makes the abutment members SP1 and SP2 unable to move in the X direction. The restraining members F1 may be in intimate contact with the abutment members SP1 and SP2 and fixed so as to be immovable in the X direction. Alternatively, the restraining members F1 may be movable in the X direction when necessary so as to apply predetermined stress to the abutment members SP1 and SP2 in the X direction.

Following the abutment restraining sub-step S52, a transition is made to the pressing and connecting sub-step S53. The sub-step S53 first involves moving the upper mold MU and the lower mold MD toward the intermediate member 3 such that the skin members 1 and 2 are, as illustrated in FIG. 9(b), brought into contact with the intermediate member 3 (S531). At this point, the restraining members F1 continue to restrain the abutment members SP1 and SP2, and the supporting members MU1 and MD1 continue to apply tensile loads to the skin members 1 and 2. While the restraint and the application of tensile loads are continued, the sub-step S53 involves starting pressing the skin members 1 and 2 against the intermediate member 3 with the upper mold MU and the lower mold MD. The skin members 1 and 2 are thus connected to the recesses and the protrusions of the intermediate member 3. Specifically, the upper surface portions C31 and the first skin member 1 are thermally welded to each other, and the lower surface portions C32 and the second skin member 2 are thermally welded to each other (S532). In this case, control is exercised such that the timing of connecting the first skin member 1 and the intermediate member 3 (i.e., the timing of starting the pressurizing and connecting (or thermal welding) process S532) coincides with the timing of connecting the second skin member 2 and the intermediate member 3. In starting the pressing and connecting sub-step S53, the present embodiment involves exerting control in accordance with, for example, thermal capacity or capacities and/or shape(s) of the intermediate member 3 and/or the skin members 1 and 2, such that temperature variations between the members 1, 2 and 3 will not occur. So as to continue the variation-free condition, control for causing the connecting timings to coincide with each other is exercised as described above. This makes it possible to increase the uniformity of temperature conditions between the members 1, 2, and 3 and further improve the quality of the panel member 100. At the time of the pressing and connecting sub-step S53, the infrared heaters IH have already been moved as previously mentioned (S513). Because the temperature reduction of the thermoplastic resin in the skin members 1 and 2 and the intermediate member 3 proceeds, the process is desirably performed within a short period of time. In the present embodiment, the pressing and connecting sub-step S53 involves continuing to heat the abutment members SP1 and SP2 and the molds MU and MD. This accordingly makes it possible to limit the temperature reduction and prevent a reduction in connection (or thermal welding) strength. Because movement of the abutment members SP1 and SP2 is restrained by the restraining members F1, deformation of the abutment members SP1 and SP2 caused by thermal expansion is preventable. Upon receiving pressing force from the upper mold MU and the lower mold MD in the Z direction, the abutment members SP1 and SP2 may be subjected to stress in the horizontal direction (i.e., the X direction). Deformation and movement of the abutment members SP1 and SP2 caused by this stress, however, are also preventable. Deformation of the intermediate member 3 is also preventable. Accordingly, the panel member 100 having enhanced connection strength is manufacturable. The present embodiment involves performing the pressing and connecting sub-step S53 after having placed the abutment members SP1 and SP2, or in particular, after having placed the abutment members SP1 and SP2 conforming to the sizes and shapes of the vacant regions V1 and V2. Consequently, the present embodiment is able to cause the first skin member 1 to be substantially uniformly pressed against the protrusions of the intermediate member 3 and the abutment members SP1, and cause the second skin member 2 to be substantially uniformly pressed against the recesses of the intermediate member 3 and the abutment members SP2 (see FIG. 8(a)).

Subsequently, a transition is made to the pressing and cooling sub-step S54. Although not illustrated, the upper mold MU and the lower mold MD are internally provided with coolant passages through which a coolant flows. The pressing and cooling sub-step S54 involves causing the coolant to flow through the upper mold MU and the lower mold MD so as to cool the upper mold MU and the lower mold MD (S541). As a result of this cooling, the skin members 1 and 2 and the intermediate member 3 are also cooled, with the result that the skin members 1 and 2 and the intermediate member 3 decrease in temperature. The sub-step S54 also involves continuing: the restraint imposed on the abutment members SP1 and SP2 by the restraining members F1; application of tensile loads to the skin members 1 and 2 from the supporting members MU1 and MD1; and pressing by the upper mold MU and the lower mold MD in the Z direction. As a result of cooling described above, the upper mold MU, the lower mold MD, the skin members 1 and 2, or the intermediate member 3 may shrink. Continuing the restraint, application of tensile loads, and pressing as described above, however, would exert pressure feedback that involves continuing application of a predetermined pressure if such shrinkage has occurred, and would thus make it possible to achieve desired shapes and quality with stability. When the sub-step S54 is executable without being affected by shape change(s) of, for example, the skin members 1 and 2 or the intermediate member 3 resulting from temperature change(s), the application of tensile loads may be stopped in advance.

When the temperatures of the upper mold MU and the lower mold MD have decreased to a predetermined crystallization temperature of the thermoplastic resin in the pressing and cooling sub-step S54, a transition is made to the abutment removing sub-step S55. The sub-step S55 involves stopping the upper mold MU and the lower mold MD from pressurizing (including applying tensile loads to) the skin members 1 and 2 (S551), and lifting the restraint imposed by the restraining members F1 (S552). Then, the panel member 100 that has the skin members 1 and 2 connected to the intermediate member 3 is removed. Because the abutment members SP1 and SP2 are still inserted into the panel member 100 at this point, a pushing bar is pushed into the panel member 100 in the Y direction (see FIG. 1(a)) so as to remove the abutment members SP1 and SP2 (S553). As a result, the vacant regions V1 and V2 are provided successfully as illustrated in FIG. 9(c), and the connection regions C11 and C21 are able to provide satisfactory connection strength. As previously mentioned, the present embodiment, in particular, involves connecting the members 1, 2, and 3 by applying pressure thereto, with the abutment members SP1 and SP2 placed, thus enabling the connection regions C11 and C21 to provide sufficient connection strength and enabling regions other than the connection regions C11 and C21 to be also uniformly pressed. This allows the panel member 100 to have a satisfactory strength distribution. The process in the pressing and cooling sub-step S54 is performed so as to enable the above-mentioned pressure feedback. In this case, the abutment members SP1 and SP2 have shapes conforming to the desired vacant regions V1 and V2, which contributes to providing the satisfactory strength distribution. The present embodiment enables the skin members 1 and 2 and the intermediate member 3 to have favorable shapes at sophisticated level. Consequently, the present embodiment is able to closely connect the connection regions C11 and C21 of the skin members 1 and 2 to the intermediate member 3 and cause the other regions of the skin members 1 and 2 to have smooth surface shapes. The present embodiment is also able to cause corner portions of the recesses and protrusions of the intermediate member 3 to have suitable shapes.

The panel member 100 manufactured as described above is able to have a layered structure that is uniform in, for example, thickness and shape across not only the connection regions C11 and C21 and the non-connection regions C12 and C22 of the skin members 1 and 2 but also the regions of the intermediate member 3, such as the upper surface portions C31, the lower surface portions C32, and the connectors C33. Accordingly, the panel member 100 is able to have stable bending strength and durability. The panel member 100 according to the present embodiment, whose structure is such that the proportion occupied by the non-connection regions C12 is large, is advantageous in terms of achieving the above-described effects and weight reduction. The direction in which the corrugated cross-sectional shape of the intermediate member 3 extends corresponds to the Y direction, and the carbon fibers in the uppermost layer of the first skin member 1 are oriented to extend in the X direction perpendicular to the Y direction. This makes it possible to reduce the degree of deflection and achieve high durability to withstand an impact load. The first skin member 1 has the four-layer structure and is thus larger in thickness and stronger in biaxial orientation than the second skin member 2 having the three-layer structure. The first skin member 1, which serves as the upper skin member, carries out its functions at or above a desired level in terms of, for example, strength to withstand an impact from above.

In the present embodiment, tensile loads, which have been applied in the skin member placing step S3, are applied continuously until the pressing and cooling sub-step S54. This makes it possible to provide stable connection strength between each of the skin members 1 and 2 and the intermediate member 3. Not only the connection regions but also the non-connection regions C12 and C22 are allowed to be stabilized in shape and quality. Accordingly, the panel member 100 is able to have high durability to withstand out-of-plane compression. When pressure is applied from above to the first skin member 1 serving as the upper skin member, the intermediate member 3 changes in shape substantially uniformly for each pitch LC, with the result that the panel member 100 is satisfactorily compressed in the Z direction. Because the intermediate member 3 has the four-layer structure in which the carbon fibers that are continuous fibers are biaxially oriented as mentioned above, the panel member 100 would be able to exhibit high durability if the panel member 100 is in the compressed state just described. The carbon fibers 13 in the uppermost layer located close to the first skin member 1 are oriented at 0 degrees (see FIG 2(b)), which significantly produces the effect of enhancing durability. Because the panel member 100 contains the carbon fibers 13 in the uppermost layer, the corner portions of the intermediate member 3 (or specifically, areas that change from areas connected to the first skin member 1 to areas (i.e., non-connection areas) not connected to the first skin member 1) are reinforced so as to maintain the shape of the first skin member 1. The shape of the entirety of the panel member 100 is maintained satisfactorily. This accordingly results in an increase in strength to withstand out-of-plane compression described above.

The manufacturing apparatus according to the present embodiment is a manufacturing apparatus to carry out the above-described manufacturing method. The manufacturing apparatus according to the present embodiment includes the upper mold MU, the lower mold MD, the abutment members SP1 and SP2, and the restraining members F1. Because the manufacturing apparatus includes these members, the manufacturing apparatus is able to appropriately exercise control including the order and control of the manufacturing steps described above. In the present embodiment, the heating process and the connecting process are performed. The manufacturing apparatus according to the present embodiment is designed in consideration of influences of heat dissipation and is thus able to ensure operational promptness. The manufacturing apparatus according to the present embodiment is able to apply appropriate loads not only in the course of each process but also at the times before and after each process. The manufacturing apparatus according to the present embodiment is preferable because stable product quality is achievable. The manufacturing apparatus is not limited to an integrated configuration but may be configured to be separately arranged in a predetermined space, as long as the manufacturing apparatus is able to perform the above-described method and achieve its effects.

### Second Embodiment of Panel Member Manufacturing Method and Manufacturing Apparatus

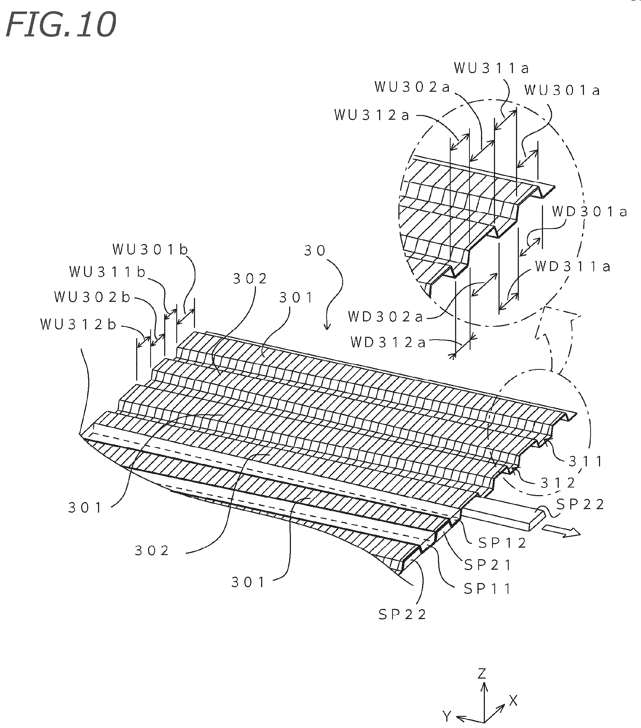

In the foregoing embodiment, the forming sub-step S21 involves forming the intermediate member 3 whose uniformly corrugated cross-sectional shape is extended in the Y direction. The forming sub-step S21, however, may involve forming the intermediate member 3 different in shape. In one example, an intermediate member 30 having a shape illustrated in FIG. 10 may be formed.

The intermediate member 30 also includes recesses and protrusions alternately arranged in an X direction. In the present embodiment, the recesses and the protrusions each have a shape whose width (i.e., whose length in the X direction) gradually increases or decreases in a Y direction. The intermediate member 30 according to the present embodiment includes: first protrusions 301 whose widths gradually increase to a positive side in the Y direction; second protrusions 302 whose widths gradually decrease to the positive side in the Y direction; first recesses 311 whose widths gradually decrease to the positive side in the Y direction; and second recesses 312 whose widths gradually increase to the positive side in the Y direction. In the present embodiment, the forming sub-step S21 involves using a pressing machine to press the intermediate member 30 into the shape illustrated in FIG. 10.

Focusing now on an upper surface portion of each first protrusion 301, its Y-direction positive side end width WU301b is larger than its Y-direction negative side end width WU301a. Focusing on an opening of each first protrusion 301 as viewed from a negative side in a Z direction (i.e., as viewed from below), its Y-direction positive side end width is larger than its Y-direction negative side end width WD301a. Focusing on an upper surface portion of each second protrusion 302, its Y-direction positive side end width WU302b is smaller than its Y-direction negative side end width WU302a. Focusing on an opening of each second protrusion 302 as viewed from the negative side in the Z direction, its Y-direction positive side end width is smaller than its Y-direction negative side end width WD302a. Focusing on an opening of each first recess 311 as viewed from a positive side in the Z direction (i.e., as viewed from above), its Y-direction positive side end width WU311b is smaller than its Y-direction negative side end width WU311a. Focusing on a lower surface portion of each first recess 311, its Y-direction positive side end width is smaller than its Y-direction negative side end width WD311a. Focusing on each second recess 312 as viewed from the positive side in the Z direction (i.e., as viewed from above), its Y-direction positive side end width WU312b is larger than its Y-direction negative side end width WU312a. Focusing now on a lower surface portion of each second recess 312, its Y-direction positive side end width is larger than its Y-direction negative side end width WD312a.

FIG. 10 illustrates the process of an abutment removing sub-step S55 according to the present embodiment, with abutment members SP11, SP12, SP21, and SP22 remaining in some of the recesses and the protrusions. FIG. 10 illustrates the process of the sub-step S55, which involves sequentially removing the abutment members SP11, SP12, SP21, and SP22.

As indicated by the open arrow, the abutment members SP22 are pushed out to a negative side in the Y direction from the second protrusions 302 whose widths gradually decrease to the positive side in the Y direction. The abutment members SP21 are pushed out to the positive side in the Y direction from the first protrusions 301 whose widths gradually increase to the positive side in the Y direction. The abutment members SP12 are pushed out to the positive side in the Y direction from the second recesses 312. The abutment members SP11 are pushed out to the negative side in the Y direction from the first recesses 311. When thermoplastic resin is subjected to a heating process and/or a connecting process (including a pressing process) as described above, the surface of each region may be minutely deformed and/or damaged. Providing the shape illustrated in FIG. 6 such that the recesses and the protrusions each gradually increase or gradually decrease in width as in the present embodiment, however, facilitates pushing out the abutment members SP11, SP12, SP21, and SP22.

### Alternative Embodiment of Panel Member Manufacturing Method and Manufacturing Apparatus

When the heating process is successfully performable during the process of heating the upper mold MU and the lower mold MD (S200) and the recess and protrusion heating step S4 in the foregoing embodiments, the heating member placing sub-step S51 may be skipped. Skipping the heating member placing sub-step S51 is preferable in terms of, for example, reducing manufacturing time and simplifying the configuration of the manufacturing apparatus. If the heating member placing sub-step S51 is skipped, the skin member connecting step S5 would involve keeping the abutment members SP1, SP2, SP11, SP12, SP21, and SP22 heated, which would make it possible to prevent a temperature reduction until the start of the connecting process and prevent a failure, such as a connection failure. In the foregoing embodiments, the intermediate members 3 and 30 each have a corrugated shape. The intermediate members 3 and 30, however, may each have any shape other than a corrugated shape as long as the intermediate members 3 and 30 each include recesses and protrusions such that resulting panel members are each provided with vacant regions. The corrugated shape of the intermediate member may be such that LU1 < LU2 or LU1 = LU2 for each pitch LC or such that LD1 > LD2 or LD1 = LD2 for each pitch LC.

The members used for the manufacturing apparatus according to the present embodiment are also not limited to the shapes or materials described above. In the foregoing embodiments, the abutment members SP1, SP2, SP11, SP12, SP21, and SP22, for example, are metallic members that achieve the above-described operational effects. The abutment members, however, may be made of any other material as long as the abutment members are thermally conductive. In one example, members low in thermal expansion coefficient and stable in shape and dimension under heated conditions may be usable because such members are able to achieve equivalent effects. When the abutment heating sub-step S42 involves additionally using heating means, the abutment members SP1, SP2, SP11, SP12, SP21, and SP22 themselves do not necessarily have to have heat conducting functions. In the foregoing embodiments, the pressing and connecting sub-step S53 involves using means for bringing the first skin member 1 and the second skin member 2 close to the intermediate member 3. The sub-step S53, however, is not limited to the use of such means. The sub-step S53 may involve using means for bringing the intermediate member 3 close to the first skin member 1 or the second skin member 2. The sub-step S53 may involve using means for bringing the first skin member 1 and the intermediate member 3 close to each other, and then bringing the first skin member 1 and the intermediate member 3 close to the second skin member 2. In the foregoing embodiments, the pressing and connecting sub-step S53 involves making the timing of connecting the first skin member 1 and the intermediate member 3 (i.e., the timing of starting the pressurizing and connecting process S532) coincide with the timing of connecting the second skin member 2 and the intermediate member 3. The timings, however, may be suitably changed in accordance with, for example, the thermal capacity or capacities of the intermediate member 3 and/or other member(s), and/or the shape(s) of the intermediate member 3 and/or the skin members 1 and 2. At the start of the pressing and connecting sub-step S53, for example, control may be exercised so as to create a time lag between the connecting timings such that temperature variations between the members 1, 2, and 3 are reduced or prevented. This makes it possible to increase the uniformity of temperature conditions between the members 1, 2, and 3 during manufacturing processes, with the result that the panel member 100 of high quality is manufacturable. Timing control for improving the quality of the panel member 100 is not limited to controlling connection starting timings (i.e., the connecting timings). The same applies to timing control for starting or ending the abutment removing sub-step S55, which ends the connecting process, and the pressing and cooling sub-step S54, which is related to cooling.

### REFERENCE SIGNS LIST

- 1: first skin member
- 2: second skin member
- 3: intermediate member
- C11: connection region (first skin member)
- C12: non-connection region (first skin member)
- C21: connection region (second skin member)
- C22: non-connection region (second skin member)
- 11: carbon fiber (first skin member)
- 13: carbon fiber (intermediate member)
- 100: panel member
- R1, R2: supporting rail

## Claims

1. A panel member comprising:
a first skin member and a second skin member each containing thermoplastic resin and having a sheet shape; and
an intermediate member containing continuous fibers and interposed between the first skin member and the second skin member, wherein
the first skin member includes a first connection region connected to the intermediate member, and a first non-connection region not connected to the intermediate member,
the second skin member includes a second connection region connected to the intermediate member, and a second non-connection region not connected to the intermediate member,
the first connection region and the first non-connection region are arranged alternately in a first direction,
the second connection region and the second non-connection region are arranged alternately in the first direction, and
a dimension of the first non-connection region in the first direction differs from a dimension of the second non-connection region in the first direction.

2. The panel member according to claim 1, wherein
the first skin member is an upper skin member disposed over the intermediate member,
the second skin member is a lower skin member disposed under the intermediate member, and
the dimension of the first non-connection region in the first direction is smaller than the dimension of the second non-connection region in the first direction.

3. The panel member according to claim 1 or 2, wherein
a dimension of the first connection region in a second direction perpendicular to the first direction is larger than a dimension of the first connection region in the first direction,
a dimension of the first non-connection region in the second direction is larger than the dimension of the first non-connection region in the first direction,
a dimension of the second connection region in the second direction is larger than a dimension of the second connection region in the first direction,
a dimension of the second non-connection region in the second direction is larger than the dimension of the second non-connection region in the first direction, and
the continuous fibers contained in the intermediate member include first intermediate continuous fibers extending in the first direction.

4. The panel member according to claim 3, wherein
the continuous fibers contained in the intermediate member further include second intermediate continuous fibers extending in a direction intersecting the first direction, and
the first intermediate continuous fibers are disposed in an area of the intermediate member located between the first skin member and the second intermediate continuous fibers and adjacent to the first skin member.

5. The panel member according to any one of claims 1 to 4, wherein
the first skin member contains first skin continuous fibers extending in the first direction, and second skin continuous fibers extending in a direction intersecting the first direction,
the first skin continuous fibers are disposed in an area of the first skin member located opposite to the intermediate member, and
the second skin continuous fibers are disposed between the first skin continuous fibers and the intermediate member.

6. The panel member according to any one of claims 1 to 5, wherein
a cross-sectional shape of the intermediate member orthogonal to a second direction perpendicular to the first direction is a corrugated shape.

7. The panel member according to any one of claims 1 to 5, wherein
the intermediate member includes sub-members arranged in the first direction and separated from each other in the first direction, and
a cross-sectional shape of each of the sub-members orthogonal to a second direction perpendicular to the first direction is a hat shape.

8. A panel member manufacturing method for manufacturing the panel member according to any one of claims 1 to 7, wherein
the intermediate member is provided with vacant regions defined by recesses and protrusions arranged in the first direction and extending in a second direction perpendicular to the first direction, and
the panel member manufacturing method comprises
a recess and protrusion heating step for performing a heating process on the recesses and the protrusions of the intermediate member,
a skin member placing step for placing the first skin member on a first side in a third direction relative to the intermediate member, and placing the second skin member on a second side in the third direction relative to the intermediate member, the third direction being perpendicular to the first direction and the second direction, and
a skin member connecting step for, after the skin member placing step, connecting the first skin member to the protrusions and connecting the second skin member to the recesses.

9. The panel member manufacturing method according to claim 8, wherein
the recess and protrusion heating step includes
an abutment placing sub-step for placing abutment members in the vacant regions and bringing the abutment members into abutment with the intermediate member, and
an abutment heating sub-step for heating the abutment members.

10. The panel member manufacturing method according to claim 8 or 9, wherein
the skin member placing step includes
a skin supporting sub-step for supporting the first skin member with a first supporting member, and a skin stretching sub-step for applying a tensile load to the first skin member in the first direction, and/or
a skin supporting sub-step for supporting the second skin member with a second supporting member, and a skin stretching sub-step for applying a tensile load to the second skin member in the first direction.

11. The panel member manufacturing method according to any one of claims 8 to 10, wherein
the skin member connecting step involves continuing to heat the abutment members after the abutment heating sub-step.

12. The panel member manufacturing method according to any one of claims 8 to 11, wherein
the skin member connecting step includes an abutment restraining sub-step for applying a restraining load to the abutment members, the restraining load preventing expansion of the abutment members in the first direction.

13. The panel member manufacturing method according to any one of claims 8 to 12, comprising an intermediate member providing step for providing the intermediate member, wherein
the intermediate member providing step includes a forming sub-step for forming the intermediate member such that either the recesses or the protrusions have shapes whose dimensions in the first direction gradually decrease in the second direction, and the others of the recesses and the protrusions have shapes whose dimensions in the first direction gradually increase in the second direction, and
the skin member connecting step includes a pressing and cooling sub-step for cooling the first skin member, the second skin member, and the intermediate member, and an abutment removing sub-step for removing the abutment members from the vacant regions in the first direction.

14. The panel member manufacturing method according to claim 8, wherein
the recess and protrusion heating step includes an abutment placing sub-step for placing abutment members in the vacant regions and bringing the abutment members into abutment with the intermediate member,
the skin member connecting step includes a pressing and connecting sub-step for connecting the first skin member to the protrusions while pressing the first skin member thereto, and connecting the second skin member to the recesses while pressing the second skin member thereto, and
the pressing and connecting sub-step is performed after the abutment placing sub-step.

15. The panel member manufacturing method according to claim 8, wherein
the skin member connecting step includes
a pressing and connecting sub-step for, with a pressing member, connecting the first skin member to the protrusions while pressing the first skin member thereto and/or connecting the second skin member to the recesses while pressing the second skin member thereto, and
a pressing and cooling sub-step for cooling the pressing member.

16. The panel member manufacturing method according to claim 15, wherein
the recess and protrusion heating step includes
an abutment placing sub-step for placing abutment members in the vacant regions and bringing the abutment members into abutment with the intermediate member, and
an abutment heating sub-step for heating the abutment members.

17. The panel member manufacturing method according to claim 16, wherein
the skin member connecting step includes a heating member placing sub-step for placing a heating member between the first skin member and the intermediate member so as to heat the first skin member and the intermediate member with the heating member, and/or placing a heating member between the second skin member and the intermediate member so as to heat the second skin member and the intermediate member with the heating member.

18. A panel member manufacturing apparatus for manufacturing the panel member according to any one of claims 1 to 7, wherein
the intermediate member is provided with vacant regions defined by recesses and protrusions arranged in the first direction and extending in a second direction perpendicular to the first direction, and
the panel member manufacturing apparatus comprises
a first mold to place the first skin member on a first side in a third direction relative to the intermediate member and support the first skin member such that the first skin member is movable toward a second side in the third direction, the third direction being perpendicular to the first direction and the second direction,
a second mold to place the second skin member on the second side in the third direction relative to the intermediate member and support the second skin member such that the second skin member is movable toward the first side in the third direction,
abutment members to be placed in the vacant regions of the intermediate member and brought into abutment with the recesses and the protrusions, and
a restraining member to restrain movement of the abutment members in the first direction.

19. A panel member manufacturing method for manufacturing a panel member by connecting a continuous fiber-containing intermediate member to a first skin member and a second skin member each containing thermoplastic resin and having a sheet shape, wherein
the intermediate member is disposed between the first skin member and the second skin member,
the intermediate member is provided with vacant regions defined by recesses and protrusions arranged in a first direction and extending in a second direction perpendicular to the first direction,
the panel member manufacturing method comprises
a recess and protrusion heating step for performing a heating process on the recesses and the protrusions of the intermediate member,
a skin member placing step for placing the first skin member on a first side in a third direction relative to the intermediate member, and placing the second skin member on a second side in the third direction relative to the intermediate member, the third direction being perpendicular to the first direction and the second direction, and
a skin member connecting step for, after the skin member placing step, connecting the first skin member to the protrusions and connecting the second skin member to the recesses, and
the recess and protrusion heating step includes
an abutment placing sub-step for placing abutment members in the vacant regions and bringing the abutment members into abutment with the intermediate member, and
an abutment heating sub-step for heating the abutment members.

20. The panel member manufacturing method according to claim 19, wherein
the skin member placing step includes
a skin supporting sub-step for supporting the first skin member with a first supporting member, and a skin stretching sub-step for applying a tensile load to the first skin member in the first direction, and/or
a skin supporting sub-step for supporting the second skin member with a second supporting member, and a skin stretching sub-step for applying a tensile load to the second skin member in the first direction.

21. The panel member manufacturing method according to claim 19 or 20, wherein
the skin member connecting step involves continuing to heat the abutment members after the abutment heating sub-step.

22. The panel member manufacturing method according to any one of claims 19 to 21, wherein
the skin member connecting step includes an abutment restraining sub-step for applying a restraining load to the abutment members, the restraining load preventing expansion of the abutment members in the first direction.

23. The panel member manufacturing method according to any one of claims 19 to 22, comprising an intermediate member providing step for providing the intermediate member, wherein
the intermediate member providing step includes a forming sub-step for forming the intermediate member such that either the recesses or the protrusions have shapes whose dimensions in the first direction gradually decrease in the second direction, and the others of the recesses and the protrusions have shapes whose dimensions in the first direction gradually increase in the second direction, and
the skin member connecting step includes a pressing and cooling sub-step for cooling the first skin member, the second skin member, and the intermediate member, and an abutment removing sub-step for removing the abutment members from the vacant regions in the first direction.

24. A panel member manufacturing method for manufacturing a panel member by connecting a continuous fiber-containing intermediate member to a first skin member and a second skin member each containing thermoplastic resin and having a sheet shape, wherein
the intermediate member is disposed between the first skin member and the second skin member,
the intermediate member is provided with vacant regions defined by recesses and protrusions arranged in a first direction and extending in a second direction perpendicular to the first direction,
the panel member manufacturing method comprises
a recess and protrusion heating step for performing a heating process on the recesses and the protrusions of the intermediate member,
a skin member placing step for placing the first skin member on a first side in a third direction relative to the intermediate member, and placing the second skin member on a second side in the third direction relative to the intermediate member, the third direction being perpendicular to the first direction and the second direction, and
a skin member connecting step for, after the skin member placing step, connecting the first skin member to the protrusions and connecting the second skin member to the recesses,
the recess and protrusion heating step includes an abutment placing sub-step for placing abutment members in the vacant regions and bringing the abutment members into abutment with the intermediate member,
the skin member connecting step includes a pressing and connecting sub-step for connecting the first skin member to the protrusions while pressing the first skin member thereto, and connecting the second skin member to the recesses while pressing the second skin member thereto, and
the pressing and connecting sub-step is performed after the abutment placing sub-step.

25. A panel member manufacturing method for manufacturing a panel member by connecting a continuous fiber-containing intermediate member to a first skin member and a second skin member each containing thermoplastic resin and having a sheet shape, wherein
the intermediate member is disposed between the first skin member and the second skin member,
the intermediate member is provided with vacant regions defined by recesses and protrusions arranged in a first direction and extending in a second direction perpendicular to the first direction,
the panel member manufacturing method comprises
a recess and protrusion heating step for performing a heating process on the recesses and the protrusions of the intermediate member,
a skin member placing step for placing the first skin member on a first side in a third direction relative to the intermediate member, and placing the second skin member on a second side in the third direction relative to the intermediate member, the third direction being perpendicular to the first direction and the second direction, and
a skin member connecting step for, after the skin member placing step, connecting the first skin member to the protrusions and connecting the second skin member to the recesses, and
the skin member connecting step includes
a pressing and connecting sub-step for, with a pressing member, connecting the first skin member to the protrusions while pressing the first skin member thereto and/or connecting the second skin member to the recesses while pressing the second skin member thereto, and
a pressing and cooling sub-step for cooling the pressing member.

26. The panel member manufacturing method according to claim 25, wherein
the recess and protrusion heating step includes
an abutment placing sub-step for placing abutment members in the vacant regions and bringing the abutment members into abutment with the intermediate member, and
an abutment heating sub-step for heating the abutment members.

27. The panel member manufacturing method according to claim 26, wherein
the skin member connecting step includes a heating member placing sub-step for placing a heating member between the first skin member and the intermediate member so as to heat the first skin member and the intermediate member with the heating member, and/or placing a heating member between the second skin member and the intermediate member so as to heat the second skin member and the intermediate member with the heating member.

28. A panel member manufacturing apparatus for manufacturing a panel member by connecting a continuous fiber-containing intermediate member to a first skin member and a second skin member each containing thermoplastic resin and having a sheet shape, wherein
the intermediate member is disposed between the first skin member and the second skin member,
the intermediate member is provided with vacant regions defined by recesses and protrusions arranged in the first direction and extending in a second direction perpendicular to the first direction, and
the panel member manufacturing apparatus comprises
a first mold to place the first skin member on a first side in a third direction relative to the intermediate member and support the first skin member such that the first skin member is movable toward a second side in the third direction, the third direction being perpendicular to the first direction and the second direction,
a second mold to place the second skin member on the second side in the third direction relative to the intermediate member and support the second skin member such that the second skin member is movable toward the first side in the third direction,
abutment members to be placed in the vacant regions of the intermediate member and brought into abutment with the recesses and the protrusions, and
a restraining member to restrain movement of the abutment members in the first direction.

## Amended claims

### Amended claims under Art. 19.1 PCT

1. (Amended) A panel member comprising:
a first skin member and a second skin member each containing thermoplastic resin and having a sheet shape; and
an intermediate member containing continuous fibers and interposed between the first skin member and the second skin member, wherein
the first skin member includes a first connection region connected to the intermediate member, and a first non-connection region not connected to the intermediate member,
the second skin member includes a second connection region connected to the intermediate member, and a second non-connection region not connected to the intermediate member,
the first connection region and the first non-connection region are arranged alternately in a first direction,
the second connection region and the second non-connection region are arranged alternately in the first direction,
a dimension of the first non-connection region in the first direction is smaller than a dimension of the second non-connection region in the first direction,
the first skin member includes layers, and
an outermost layer of the first skin member contains first skin continuous fibers extending in the first direction, the outermost layer being one of the layers that is located farthest away from the intermediate member.

2. (Amended) The panel member according to claim 1, wherein
the first skin member is an upper skin member disposed over the intermediate member, and
the second skin member is a lower skin member disposed under the intermediate member.

3. The panel member according to claim 1 or 2, wherein
a dimension of the first connection region in a second direction perpendicular to the first direction is larger than a dimension of the first connection region in the first direction,
a dimension of the first non-connection region in the second direction is larger than the dimension of the first non-connection region in the first direction,
a dimension of the second connection region in the second direction is larger than a dimension of the second connection region in the first direction,
a dimension of the second non-connection region in the second direction is larger than the dimension of the second non-connection region in the first direction, and
the continuous fibers contained in the intermediate member include first intermediate continuous fibers extending in the first direction.

4. The panel member according to claim 3, wherein
the continuous fibers contained in the intermediate member further include second intermediate continuous fibers extending in a direction intersecting the first direction, and
the first intermediate continuous fibers are disposed in an area of the intermediate member located between the first skin member and the second intermediate continuous fibers and adjacent to the first skin member.

5. (Amended) The panel member according to any one of claims 1 to 4, wherein
the first skin member contains second skin continuous fibers extending in a direction intersecting the first direction,
the first skin continuous fibers are disposed in an area of the first skin member located opposite to the intermediate member, and
the second skin continuous fibers are disposed between the first skin continuous fibers and the intermediate member.

6. The panel member according to any one of claims 1 to 5, wherein
a cross-sectional shape of the intermediate member orthogonal to a second direction perpendicular to the first direction is a corrugated shape.

7. The panel member according to any one of claims 1 to 5, wherein
the intermediate member includes sub-members arranged in the first direction and separated from each other in the first direction, and
a cross-sectional shape of each of the sub-members orthogonal to a second direction perpendicular to the first direction is a hat shape.

8. A panel member manufacturing method for manufacturing the panel member according to any one of claims 1 to 7, wherein
the intermediate member is provided with vacant regions defined by recesses and protrusions arranged in the first direction and extending in a second direction perpendicular to the first direction, and
the panel member manufacturing method comprises
a recess and protrusion heating step for performing a heating process on the recesses and the protrusions of the intermediate member,
a skin member placing step for placing the first skin member on a first side in a third direction relative to the intermediate member, and placing the second skin member on a second side in the third direction relative to the intermediate member, the third direction being perpendicular to the first direction and the second direction, and
a skin member connecting step for, after the skin member placing step, connecting the first skin member to the protrusions and connecting the second skin member to the recesses.

9. The panel member manufacturing method according to claim 8, wherein
the recess and protrusion heating step includes
an abutment placing sub-step for placing abutment members in the vacant regions and bringing the abutment members into abutment with the intermediate member, and
an abutment heating sub-step for heating the abutment members.

10. The panel member manufacturing method according to claim 8 or 9, wherein
the skin member placing step includes
a skin supporting sub-step for supporting the first skin member with a first supporting member, and a skin stretching sub-step for applying a tensile load to the first skin member in the first direction, and/or
a skin supporting sub-step for supporting the second skin member with a second supporting member, and a skin stretching sub-step for applying a tensile load to the second skin member in the first direction.

11. The panel member manufacturing method according to any one of claims 8 to 10, wherein
the skin member connecting step involves continuing to heat the abutment members after the abutment heating sub-step.

12. The panel member manufacturing method according to any one of claims 8 to 11, wherein
the skin member connecting step includes an abutment restraining sub-step for applying a restraining load to the abutment members, the restraining load preventing expansion of the abutment members in the first direction.

13. The panel member manufacturing method according to any one of claims 8 to 12, comprising an intermediate member providing step for providing the intermediate member, wherein
the intermediate member providing step includes a forming sub-step for forming the intermediate member such that either the recesses or the protrusions have shapes whose dimensions in the first direction gradually decrease in the second direction, and the others of the recesses and the protrusions have shapes whose dimensions in the first direction gradually increase in the second direction, and
the skin member connecting step includes a pressing and cooling sub-step for cooling the first skin member, the second skin member, and the intermediate member, and an abutment removing sub-step for removing the abutment members from the vacant regions in the first direction.

14. The panel member manufacturing method according to claim 8,
wherein
the recess and protrusion heating step includes an abutment placing sub-step for placing abutment members in the vacant regions and bringing the abutment members into abutment with the intermediate member,
the skin member connecting step includes a pressing and connecting sub-step for connecting the first skin member to the protrusions while pressing the first skin member thereto, and connecting the second skin member to the recesses while pressing the second skin member thereto, and
the pressing and connecting sub-step is performed after the abutment placing sub-step.

15. The panel member manufacturing method according to claim 8, wherein
the skin member connecting step includes
a pressing and connecting sub-step for, with a pressing member, connecting the first skin member to the protrusions while pressing the first skin member thereto and/or connecting the second skin member to the recesses while pressing the second skin member thereto, and
a pressing and cooling sub-step for cooling the pressing member.

16. The panel member manufacturing method according to claim 15, wherein
the recess and protrusion heating step includes
an abutment placing sub-step for placing abutment members in the vacant regions and bringing the abutment members into abutment with the intermediate member, and
an abutment heating sub-step for heating the abutment members.

17. The panel member manufacturing method according to claim 16, wherein
the skin member connecting step includes a heating member placing sub-step for placing a heating member between the first skin member and the intermediate member so as to heat the first skin member and the intermediate member with the heating member, and/or placing a heating member between the second skin member and the intermediate member so as to heat the second skin member and the intermediate member with the heating member.

18. A panel member manufacturing apparatus for manufacturing the panel member according to any one of claims 1 to 7, wherein
the intermediate member is provided with vacant regions defined by recesses and protrusions arranged in the first direction and extending in a second direction perpendicular to the first direction, and
the panel member manufacturing apparatus comprises
a first mold to place the first skin member on a first side in a third direction relative to the intermediate member and support the first skin member such that the first skin member is movable toward a second side in the third direction, the third direction being perpendicular to the first direction and the second direction,
a second mold to place the second skin member on the second side in the third direction relative to the intermediate member and support the second skin member such that the second skin member is movable toward the first side in the third direction,
abutment members to be placed in the vacant regions of the intermediate member and brought into abutment with the recesses and the protrusions, and
a restraining member to restrain movement of the abutment members in the first direction.
